# NEW EUROPEAN PATENT SPECIFICATION

(11) **EP 0 268 237 B2**
(45) Date of publication and mention of the opposition decision: **18.12.2002**
(45) Mention of the grant of the patent: 12.10.1994
(21) Application number: 87116861.3
(22) Date of filing: 16.11.1987
(51) Int. Cl.: G01N 1/10, G01N 35/00, G01F 11/02

(54) **Apparatus and process for reagent fluid dispensing**
Verfahren und Vorrichtung zum Abgeben von flüssigen Reagenzien
Procédé et dispositif de distribution de réactif liquide

(30) Priority: 17.11.1986 US 931476
(43) Date of publication of application: 25.05.1988
(73) Proprietor: ABBOTT LABORATORIES, Abbott Park, Illinois 60064-3500 (US)
(72) Inventor: Hayes, Donald J., Plano Texas 75075 (US); Wallace, David B., Dallas Texas 75243 (US); Verlee, Donald J., Libertyville Illinois 60048 (US); Houseman, Kenneth R., Racine Wisconsin 53403 (US)
(74) Representative: Modiano, Guido, Dr.-Ing.

(56) References cited:
- EP-A- 0 119 573
- GB-A- 1 526 708
- US-A- 3 775 058
- US-A- 3 857 049
- US-A- 4 339 763
- US-A- 4 449 134
- IBM JOURNAL OF RESEARCH AND DEVELOPMENT, VOL.28, NUMBER 3, MAY 1984

## Description

### BACKGROUND OF THE INVENTION

The present invention relates to an apparatus and process for dispensing reagent fluids, wherein a transducer is used to propel small quantities of the fluid towards a positioned target.

Diagnostic assays often require systems for metering, dispensing and printing reagent fluids. In the case of metering and dispensing, such systems comprise both manual and automatic means. For purposes of practicality, the present background discussion will focus on the methods of metering and dispensing 100 micro-liter volumes or less.

The manual systems of metering and dispensing include the glass capillary pipet; the micro-pipet; the precision syringe; and weighing instruments. The glass capillary pipet is formed from a precision bore glass capillary tube. The pipet typically comprises a fire blown bulb and a tubular portion fire drawn to a fine point. Fluid is precisely metered by aspirating liquid through the tube into the bulb to a predetermined level indicated by an etched mark. The fluid may then be dispensed by blowing air through the tube.

The micro-pipet typically comprises a cylinder and a spring loaded piston. The travel of the piston is precisely determined by a threaded stop. The distance the piston travels within the cylinder and the diameter of the cylinder define a precise volume. The fluid is aspirated into and dispensed from the micro-pipet in precise quantities by movement of the piston within the cylinder.

The precision syringe generally comprises a precisely manufactured plunger and cylinder with accurately positioned metering marks. The fluid is introduced into and dispensed from the syringe by movement of the plunger between the marks.

Weighing techniques for dispensing fluids often simply involve weighing a quantity of fluid. The density of the fluid may then be used to determine the fluid volume.

Exemplary automatic metering and dispensing systems include the precision syringe pump; the peristaltic pump; and the high performance liquid chromatography (HPLC) metering valve. The precision syringe pump generally comprises a precision ground piston located within a precision bore cylinder. The piston is moved within the cylinder in precise increments by a stepping motor.

The peristaltic pump comprises an elastomeric tube which is sequentially pinched by a series of rollers. Often the tube is placed inside a semi-circular channel and the rollers mounted on the outer edge of a disc driven by a stepping motor. The movement of the rollers against the tubing produces peristaltic movement of the fluid.

The HPLC metering valve comprises a defined length of precision inner diameter tubing. The fluid is introduced into the define volume of the tubing with the valve in a first position and then dispensed from the tubing when the valve is placed in a second position.

All of the above metering and dispensing systems have the disadvantage that the volumes dispensed are relatively large. Furthermore, these systems are also relatively slow, inefficient and comprise precision fitted components which are particularly susceptible to wear.

The printing of reagent fluids is frequently required in the manufacture of chemical assay test strips. Selected reagents are printed in a desired configuration on strips of filter paper. The strips may then be used as a disposable diagnostic tool to determine the presence or absence of a variety of chemical components.

Generally, to perform a chemical assay with a test strip, the strip is exposed to a fluid or a series of fluids to be tested, such as blood, serum or urine. In some instances, the strip is rinsed and processed with additional reagents prior to being interpreted. The precise interpretation depends on the type of chemical reactions involved, but it may be as simple as visually inspecting the test strip for a particular color change.

The manufacture of test strips generally involves either a manufacturing process or a blotting process. The blotting process is the simplest manufacturing method and permits most reagents to be applied without modification. A disadvantage of this process is that it is difficult to blot the fluids onto the test strip with precision.

The printing process will often involve any of three well known methods: silk screening; gravure; and transfer printing. The silk screening of reagents generally involves producing a screen by photographic methods in the desired configuration for each reagent to be printed. The screen is exposed under light to a preselected pattern and then developed. The areas of the screen which are not exposed to light, when developed, become porous. However, the areas of the screen which have been exposed to light remain relatively nonporous. The screen is then secured in a frame and the test strip placed below. The desired reagent fluid, specially prepared to have a high viscosity, is spread over the top side of the screen. The reagent passes through the porous areas of the screen and onto the test strip. The test strip is then subjected to a drying process, specific to each reagent. Once the test strip is dry, it may be printed again using a different screen, pattern and reagent.

The gravure method of printing reagents comprises coating a metal surface with a light sensitive polymer. The polymer is exposed to light in the desired predetermined pattern. When developed, the polymer creates hydrophilic and hydrophobic regions. The reagent is specially prepared such that when applied to the metal it will adhere only to the hydrophilic regions. After the specially prepared reagent is applied, the test strip is pressed against the metal and the reagent is transferred from the metal to the test strip.

The transfer printing method comprises transferring the reagents from a die to the test strip in the desired pattern. The die is made with the appropriate pattern on its surface and then coated with the desired, specially prepared reagent. A rubber stamp mechanism is pressed against the die to transfer the reagent in the desired pattern from the die to the rubber stamp. The rubber stamp is then pressed against the test strip to transfer the reagent, in the same pattern, to the test strip.

Each of the above-mentioned reagent printing techniques has significant disadvantages. The most common disadvantage is the requirement that the reagents must be specially prepared. Additionally, if a variety of reagents are to be printed onto a single test strip, the strip must be carefully aligned prior to each printing. This alignment procedure increases the cost and decreases the throughput of the printing process. Moreover, a special die or screen must be produced for each pattern to be printed. A further disadvantage arises in that the above printing methods are unable to place reproduceable minute quantities of reagent on the test strip.

A microdroplet dispersing device useful in biochemical applications known from EP-A-119 573.

An ink printer device with the ability of printing gray shades is known from US-A-3 857 049. Shading is performed by varying the amount jetted ink.

US-A-4 339 763 describes a recording apparatus which includes a writing fluid source feeding a drop projection device which ejects drops of writing fluid from a nozzle. The volume of the drops is individually controllable by means of electrical pulses applied to the drop projection device. The known drop projection device includes a piezoelectric crystal which is inwardly expanded to create an expansion wave in the writing fluid.

A similar system is known from IBM Journal of research and development, vol. 28, number 3, May 1984.

US-A-3 775 058 describes a method and apparatus for mixing liquids. The known apparatus includes a drop generator which is controlled for splitting a fluid flow into drops. A further drop generator is provided for splitting a further fluid flow into drops. Mixing of the drops can occur within a collector.

GB-A-1 526 708 teaches a method for making a reagent test device. Among numerous methods, ink jet printing is described as a suitable one for making reagent test devices.

It is an object of the present invention to provide a dispensing method and apparatus which avoids these disadvantages.

### SUMMARY OF THE PRESENT INVENTION

The present invention is directed to a reagent dispensing apparatus and method, as defined in the accompanying claims.

According to the present invention used in dispensing reagent fluids, a jetting tube is concentrically located within a piezo-electric transducer. The jetting tube comprises an orifice at one end and a reagent receiving aperture at the other end. The receiving end of the jetting tube is connected to a filter which is in turn connected to a reservoir containing a selected reagent. A jetting control unit supplies an electrical pulse of short duration to the transducer in response to a command issued by a computer. The electrical pulse causes the volume defined by the jetting tube to expand by an amount sufficient to intake a small quantity of reagent fluid from the reservoir. At the end of the pulse duration, the transducer de-expands propelling a small quantity of the reagent fluid through the orifice and into a fluid receptacle. If desired, additional droplets may be deposited in the receptacle or the receptacle aligned with an additional jetting tube for receiving an additional reagent fluid.

One advantage of the present invention is that precise minute quantities of reagent fluid may be dispensed in a reproducible manner. Additionally, the method and apparatus may be used to emit droplets of fluids having a wide range of reagent fluid viscosities and surface tensions. The reagents do not in general have to be specially adapted for use with the present invention.

The invention itself, together with further objects and attendant advantages, will best be understood by reference to the following detailed description, taken in conjunction with the accompanying drawings.

### BRIEF DESCRIPTION OF THE DRAWINGS

FIGURE 1 is a schematic representation of a first preferred embodiment of the present invention showing the use of multiple jetting heads to meter and dispense reagent fluid.
FIGURE 2a is a perspective view of a first preferred embodiment of the jetting head of the present invention.
FIGURE 2b is a cut-away perspective view of the preferred embodiment of Fig. 2a taken along lines 2b-2b with the contact pins removed.
FIGURE 2c is a sectional representation of the preferred embodiment of Fig. 2a taken along lines 2c-2c.
FIGURE 2d is a sectional representation of the preferred embodiment of Fig. 2c taken along lines 2d-2d.
FIGURE 2e is a sectional representation of the jetting tube and transducer of the preferred embodiment of Fig. 2b taken along lines 2e-2e.
FIGURE 3 is a schematic representation of a system operating in the drop on demand mode as a reagent printing system.
FIGURE 4 is a schematic representation of a system operating in the continuous mode as a reagent printing system.
FIGURE 5a is a schematic representation of a portion of the jetting head control unit showing the LED strobe circuit.
FIGURE 5b is a schematic representation of a portion of the jetting head control unit showing the high voltage power supply circuit.
FIGURE 5c is a schematic representation of a portion of the jetting head control unit showing the print control circuit.
FIGURE 5d is a schematic representation of a portion of the jetting head control unit showing a portion of the print pulse generator.
FIGURE 5e is a schematic representation of a portion of the jetting head control unit showing an additional portion of the pulse generator.
FIGURE 6a is a perspective view of a second preferred embodiment of the jetting head of the present invention.
FIGURE 6b is an exploded view of the preferred embodiment of Fig. 6a.
FIGURE 7 is a sectional representation of a third preferred embodiment of the jetting head of the present invention.
FIGURE 8 is a sectional view of a symmetrical portion of a fourth preferred embodiment of the jetting head of the present invention.
FIGURE 9 is a graph of the drop mass of the emitted droplets as a function of emission frequency for several fluid viscosities.
FIGURE 10 is a graph of the velocity of the emitted droplets as a function of frequency for several fluid viscosities.
FIGURE 11 is a graph of the total weight of fluid emitted as a function of the number of emitted droplets for a given fluid.

### DETAILED DESCRIPTION OF THE PRESENTLY PREFERRED EMBODIMENTS

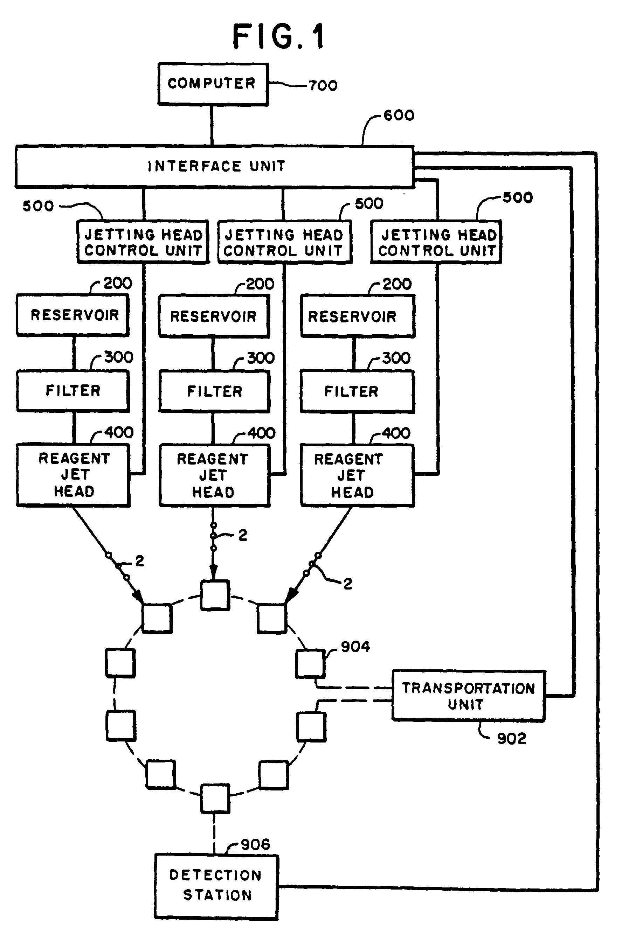

Turning now to the drawings, Fig. 1 shows a schematic representation of a reagent dispensing system generally represented as reference numeral 30. The dispensing system 30 comprises a plurality of reagent fluid reservoirs 200, a plurality of filters 300, a plurality of reagent jetting heads 400, a plurality of jetting head control units 500, an interface unit 600, a computer 700, transportation unit 902, a plurality of fluid mixing cells 904 and a detection station 906.

The reservoir 200 holds a selected quantity of reagent fluid for dispensing. The reservoir 200 is maintained at atmospheric pressure by suitable means such as an atmospheric vent. The reagent fluid is transferred from the reservoir 200 through the filter 300 to the reagent jetting head 400. The filter 300 is placed between the reservoir 200 and the jetting head 400 to ensure that any particular foreign matter in the reagent fluid is trapped before entering the jetting head 400.

The plurality of jetting heads 400 and the detection station 906 define a processing path. Each jetting head 400, which is described in detail below, ejects uniformly sized droplets 2 of reagent fluid. The droplets 2 are propelled, with controlled velocity and direction, towards a selecting mixing cell 904 or receptacle which are not a print medium positioned along the processing path by the transportation unit 902. The mixing cells 904 are comprised of non-reactive material and function as minute holding tanks for the dispensed reagent fluid.

The plurality of jetting heads 400, shown in Fig. 1, are positioned sequentially along the processing path. Alternately, some or all of the plurality of jetting heads 400 may be positioned with respect to the transportation unit 902 such that the heads 400 direct the droplets 2 into a selected mixing cell 904 simultaneously.

The jetting heads 400 and the transportation unit 902 are controlled by the computer 700. The computer 700 issues commands to an interface unit 600 which is electrically connected to the transportation unit 902 and to the jetting head control unit 500. The interface unit 600 is of conventional design and is used to control the transfer of information between the computer 700 and the jetting control unit 500. The interface unit 600 is also used to control the transfer of information between the computer 700 and the transportation unit 902.

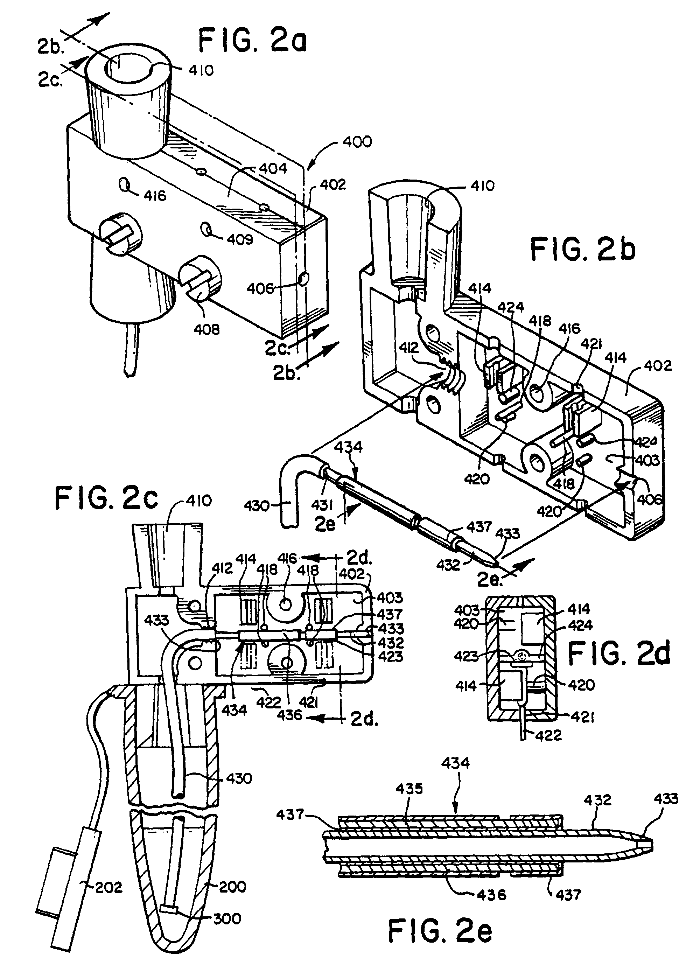

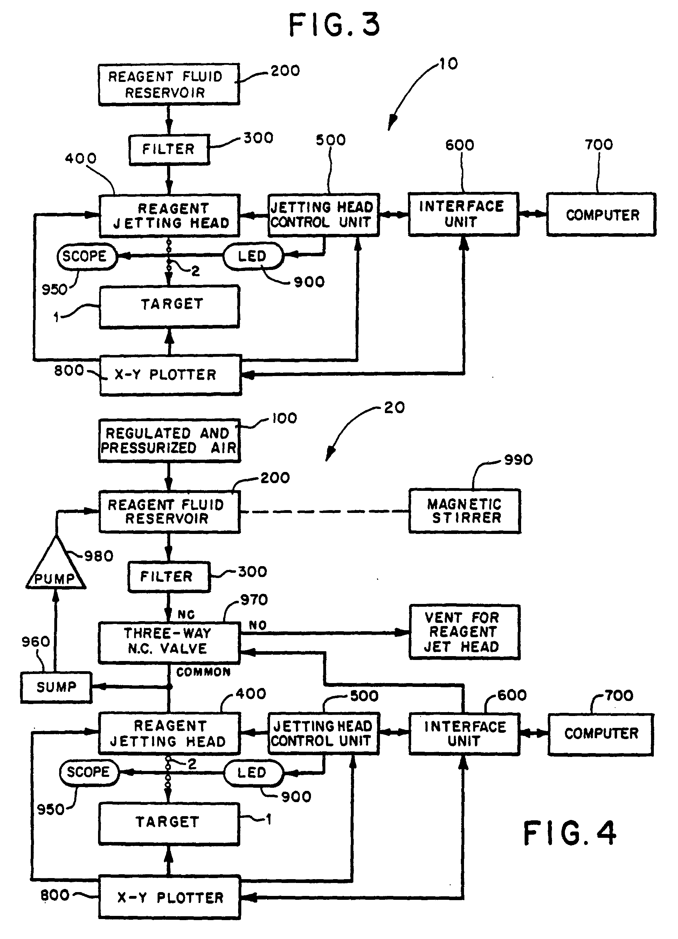

A first embodiment of the reagent jetting head is shown in Figs. 2a - 2e and generally represented by numeral 400. The jetting head 400 comprises a two piece symmetrical housing 402, 404. The housing 402, 404, when assembled, is adapted to form an orifice aperture 406, an air vent and reagent supply channel 410 and a transducer chamber 403, shown in Fig. 4b. Four screws 408, adapted to respective housing screw apertures 416, hold the housing 402, 404 in an assembled configuration.

The jetting head 400 further comprises a jetting tube 432, a piezo-electric transducer 434 and a reagent fluid supply tube 430. The jetting tube 432 defines a tapered orifice 433 at one end and a fluid receiving aperture 431 at the other end for expelling and receiving fluid, respectively. The piezo-electric transducer 434 is cylindrically shaped and secured concentrically about the mid-region of the jetting tube 432 with epoxy or other suitable means.

The piezo-electric transducer 434, shown in Fig. 2e, defines a first and second end and comprises a section of cylindrically shaped piezeo-electric material 435. An inner nickel electrode 437 covers the inner surface of the cylinder 435. The electrode 437 wraps around the first end of the cylinder 435 a sufficient distance to enable electrical connection external to the cylinder 435.

A second nickel electrode 436 covers the majority of the outer surface of the cylinder 435. The second electrode is electrically isolated from the first electrode 437 by an air gap at the face of the second end of the cylinder 435 and by an air gap on the outer surface of the cylinder 435 near the first end. When an electrical pulse is applied to the first and second electrodes 437, 436 a voltage potential is developed radially across the transducer material 435. The voltage potential causes the radial dimensions of the transducer 435 to change, which causes the volume defined by the transducer 434 to also change.

The jetting tube 432 is positioned in the transducer chamber 403 such that the receiving end 431 extends beyond the rearward end of the transducer 434. The receiving end 431 of the jetting tube 432 is inserted into one end of a reagent supply tube 430. The supply tube 430 is sealingly held to the jetting tube 432 by concentric teeth 412 formed by the housing sections 402, 404. The teeth 412 not only seal the supply tube 430 to the jetting tube 432, but, also, seal the supply tube 430 to the housing 402, 404.

The second end of the supply type 430 passes through the channel 410 and into a reagent reservoir 200. The reservoir 200 contains the reagent fluid to be dispensed by the jetting head 400. As the reagent fluid is dispensed, air is supplied to the reservoir 200 through the channel 410 to prevent the creation of a vacuum in the reservoir 200. The reservoir 200 is releasably attached to the housing 402, 404 and held in place by frictional forces. A reservoir cap 202 is flexibly attached to the reservoir 200 and adapted such that the cap 202 may be used to secure the opening in the reservoir 200 when the reservoir 200 is disengaged from the housing 402, 404.

The position of the jetting tube 432 defines the horizontal plane of the jetting head 400. The jetting tube 432 and the transducer 434 are held in a pre-defined vertical relationship with respect to the housing 402, 404 by means of two upper vertical alignment pins 418 and two lower vertical alignment pins 418. The two upper vertical alignment pins 418 extend horizontally from the housing section 402 into the transducer chamber 403. Similarly, the two lower vertical alignment pins 418 extend horizontally from the housing section 404 into the transducer chamber 403. Each vertical alignment pin 418 is formed integrally with the respective housing sections 402, 404.

The jetting tube 432 and the transducer 434 are held in a predefined horizontal relationship with respect to the housing 402, 404 by means of four horizontal alignment pins 424. Two of the horizontal alignment pins 424 extend horizontally from the housing section 402 approximately midway into the transducer chamber 403. Similarly, two of the horizontal alignment pins 424 extend horizontally from the housing section 404 approximately midway into the transducing chamber 403. Each horizontal alignment pin 424 is formed integrally with the respective housing section 402, 404. The alignment pins 418, 424, sealing teeth 412 and orifice aperture 406 are aligned and adapted to hold the jetting tube 432 and transducer 434 such that the orifice 433 of the jetting tube 432 extends into the orifice aperture 406.

An electrical transducer activation pulse is supplied to the piezo-electric transducer 434 from the jetting head control unit 500 by means of two contact pins 422. A quantity of fluid will be dispensed from the jetting tube for each applied activation pulse. The activation pulse can be produced by a variety of conventional circuits or commercially available units. Therefore a detailed description of such a circuit will not be provided. However, a circuit for producing a series of activation pulses is provided in the description of the system below. Due to the differing constraints involved in dispensing, the circuit in the printing system is not required to produce only a single pulse. However, one skilled in the art could, if desired, modify the circuit to produce a single pulse on demand for use in the dispensing embodiment.

Each contact pin 422 defines an enlarged head 423 which is adapted to contact the respective first and second electrodes 437, 436 located on the outer surface of the transducer 434. Two contact pin holders 414, integral with the housing 402, 404, are positioned to hold the respective contact pins 422 under the pin heads 423 such that each pin head 423 electrically engages the appropriate electrode 437, 436 of the transducer 434. Two contact pin engaging posts 420 extend from the housing 402, 404 opposite the contact pin holders 414 to engage and hold the contact pins 422 against the contact pin holders 414. The ends of the contact pins 422 opposite the pin heads 423 extend through the housing 402, 404 by means of contact pin apertures 421. Since the housing sections 402, 404 are formed symmetrically to one another, the contact pins 422 may be optionally attached above the transducer 434.

In operation, the reservoir 200 containing reagent fluid is fastened to the jetting head 400 such that the fluid supply tube 430 extends into the reagent fluid. The filter 300 may be fitted to the free end of the supply tube 430 or positioned inside the reservoir 200. Air is supplied through the channel 410 around the supply tube 430 to prevent the reservoir 200 from falling below atmospheric pressure. The air is prevented from entering around the supply tube 430 and into the transducer chamber 403 by the seal created between the sealing teeth 412 and the supply tube 430. The jetting tube 432 may be primed by slightly pressurizing the reservoir 200 to cause the reagent fluid to travel through the supply tube 430 and into the jetting tube 432. Once primed, the fluid is prevented from substantially withdrawing from the jetting tube 432 by the surface tension of the reagent fluid at the orifice 433.

The transducer activation pulse is conducted to the contact pins 422 of the jetting head 400. The contact pins 422 communicate the high voltage pulse to the electrodes 437, 436 of the transducer 434 with polarity such that the concentrically mounted transducer 434 expands. The rate of expansion is controlled by the rise time of the high voltage pulse which is preset to generate a rapid expansion. The expansion of the transducer 434 causes the jetting tube 432, which is epoxied to the transducer 434, to also expand. The expansion of the tube 432 generates an acoustic expansion wave interior to the tube 432 which travels axially towards the orifice 433 and towards the fluid receiving aperture 431. When the expansion wave reaches the orifice 433, the reagent fluid is partially drawn inwardly. However, the surface tension of the fluid acts to inhibit substantial inward fluid movement.

When the expansion wave reaches the end 431 of the tube 432, the expansion wave is reflected and becomes a compression wave which travels towards the center of the piezo-electric tube 434. The high voltage pulse width is adapted such that when the reflected compression wave is beneath the piezo-electric tube 434, the high voltage pulse falls, resulting in a de-expansion of the transducer 434 and the jetting tube 432. This action adds to the existing acoustic compression wave in the interior of the jetting tube 432. The enhanced compression wave travels toward the orifice causing reagent fluid to be dispensed from the tube 432. The fluid is propelled from the orifice 433 as a small droplet 2 and deposited in the selected mixing cell 904 positioned by the transportation unit 902. One droplet 2 is dispensed for each transducer activation pulse. This mode of dispensing is referred to as the drop on demand mode.

In some instances, the droplet 2 may be accompanied by at least one smaller satelite droplet. However, even if satelite droplets are present, the volume and velocity of the reagent droplets 2 are highly reproduceable. This reproduceability allows for precise dispensing of uniform, controllably sized droplets 2 of reagent fluid into the mixing cell 904.

The droplets 2 of reagents impact the mixing cell 904 with sufficient force and volume to cause fluidic mixing of the reagents. Once the desired amounts of the selected reagents are deposited in the selected mixing cell 904, mixing cell 904 is transported to the detection station 906 where the mixed reagents may be extracted for use or analyzed for assay results.

The dispensing system 30 provides numerous advantages based upon the ability of the reagent jetting head 400 to rapidly and reproduceably eject uniform quantities of a wide range of reagents. The reaction times of some chemical processes are dependent upon the volume of the reagents used. The ability of the dispensing system 30 to dispense such minute amounts of reagents thereby reduces the processing time of certain chemical assays. Furthermore, some chemical assays require a wide range of dilution ratios. Many conventional dispensing systems are unable to dispense the reagents in volume small enough to make the desired assay practical. The dispensing system of the present invention overcomes this disadvantage.

A printing system 10 is represented in Fig. 3. Structure similar in form and function to structure described above will be designated by like reference numerals. The printing system 10 comprises a reagent fluid reservoir 200, a filter 300, a reagent jetting head 400, a jetting head control unit 500, an interface 600, a computer 700, and an x-y plotter 800.

The x-y plotter 800 is a commercially available pen plotter, mechanically modified in a conventional manner such that the pen is replaced with the jetting head 400. The general operation and structure of the plotter 800 will not be described in detail. The plotter 800 accepts commands from the computer 700 thru a standard RS-232 serial interface contained within the interface unit 600. The plotter 800 processes the commands and produces control signals to drive an x-axis motor (not shown) and a y-axis motor (not shown). The x-axis motor is used to position the jetting head 400 and the y-axis motor is used to position a drum (not shown) to which the printing target 1 is attached.

The plotter 800 produces a pen down signal PENDN. This signal is applied to the control unit 500 and indicates that the plotter 800 is ready to begin a printing operation.

The control unit 500 also receives control signals from the interface unit 600. These signals include signals HIGHER*, LOWER* to control the magnitude of the pulse applied to the transducer 434; a reset signal RST to reset the control unit 500; and a series of print signals PRT*. The generation of these signals will not be described in detail since their production is performed by the conventional interface unit 600.

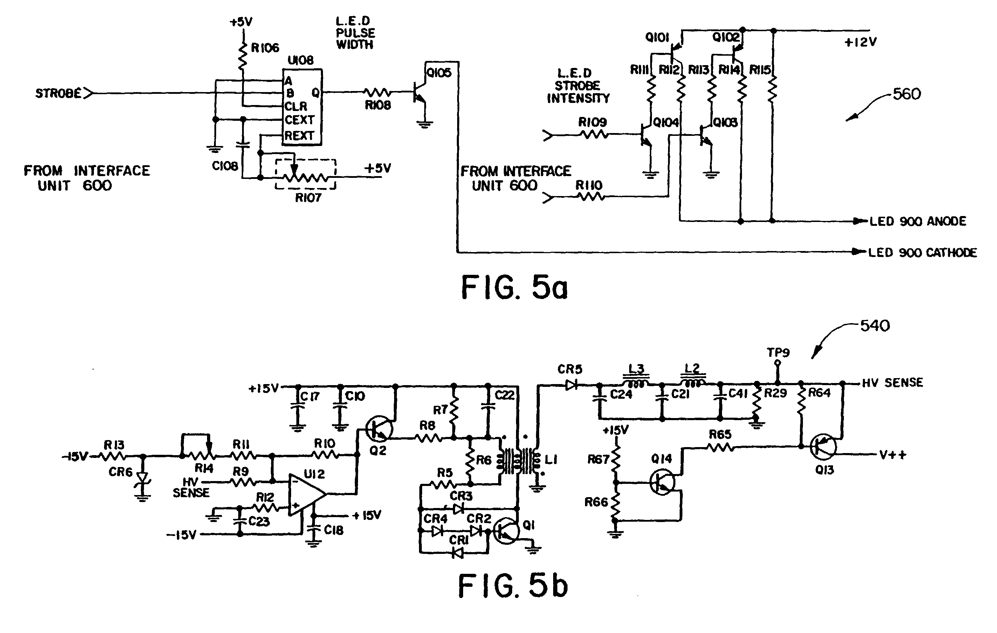

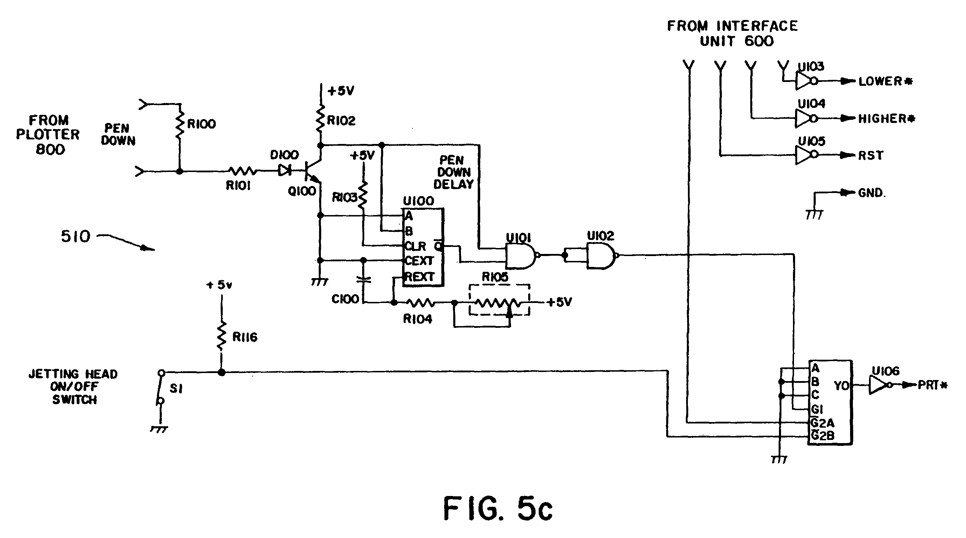

The jetting head 400 and fluid supply system 200, 300 are initialized and operate substantially as described above. The jetting head control unit 500, shown in Figs. 5a - 5e comprises a print control circuit 510, a pulse generator 530, a high voltage supply 540, and a strobe pulse generator 560. The control unit 500 also comprises a power supply. However, since the power supply is of conventional design it will not be shown or described in detail.

The print control circuit 510 receives the pen down signal PENDN from the plotter 800 and comprises a transistor Q100, a one-shot circuit U100, two NAND-gates U101, U102, a line decoder multiplexer U107 and four inverters U103-U106. The pen down signal PENDN is applied to the base of the transistor Q100 by resistors R100, R101 and diode D100. The emitter of transistor Q100 is tied to ground and the collector is connected to the + 5 volt supply by resistor R102.

The one-shot U100 comprises inputs A, B and an output Q. The B input of the one-shot U100 is connected to the collector of the transistor Q100 and the A input is tied to ground. The time period of the pulse produced by the one-shot U100 is determined by a resistor R104, a variable resistor R105 and a capacitor C100. The output Q of the one-shot U100 is combined with the collector output of the transistor Q100 by the NAND-gate U101 and then inverted by the NAND-gate U102. The circuit is operative to produce an adjustable delay in the application of the pen down signal PENDN to the control unit 500.

The line decoder U107 is circuited to function as a 3 input AND-gate. The output of the NAND-gate .U102 is applied to the first input of the decoder U107; the print signal line PRT* comprising a series of pulses from the interface unit 600 is applied to the second input; and a jetting head ON/OFF signal from switch S1 is applied to the third input. The inverter U106 inverts the output of the line decoder U107 to generate the print control signal PRT* and the inverters U103-U105 invert the control signals LOWER*, HIGHER*, and RST signals, respectively.

The high voltage supply 540, shown in Fig. 5b, provides +175 volts DC to produce a maximum pulse of +150 volts peak to peak at the reagent jetting head 400. The high voltage supply 540 comprises differential amplifier U12 and transistors Q1, Q2, Q13, Q14. A stable reference voltage of -2.5 volts DC is produced at the junction of a reservoir R13, connected to the -15 volt supply, and a diode CR6, connected to ground. The reference voltage is combined with a resistor R14 to produce an adjustable, stable voltage reference for the amplifer U12. The reference voltage is applied to the inverting input of the amplifier U12 through a resistor R11. The noninverting input of the amplifier U12 is connected to ground by a resistor R12. The amplifier U12, in combination with a feedback resistor R10, produces an output signal proportional to the difference of the voltage reference signal and the ground potential.

The output of the amplifier U12 is applied to the base of the transistor Q2 whose collector is connected to the +15 volt supply. The signal produced at the emitter of the transistor Q2 is applied to the base of the transistor Q1 through resistors R8, R6, R5, a transformer L1 and diodes CR4, CR2, CR1. The emitter of the transistor Q1 is connected to ground and the collector is connected to the +15 voltage supply through the transformer L1. A diode CR3 connects the collector of the transistor Q1 to the junction of the resistor R5 and the diode CR4. The transistor Q1 is biased for proper operation by resistors R7, R6, R5. The resistor R7 and a capacitor C22 connect the junction of the resistor R8, R6 to the +15 voltage supply.

The transistor Q1 and the transformer L1 form a "flyback" blocking oscillator. Any increase in current supplied by the transistor Q1 produces an increase in energy transferred through the secondary winding of the transformer L1 and diode CR5. Therefore, an increase in current supplied by the transistor Q1 results in an increase in power available to the high voltage output. The diodes CR1-CR4 form a "Baker clamp" which prevents transistor Q1 from saturating. The clamp thereby avoids transistor storage time.

The diode CR5 is connected to a multiple pi filter formed by the inductors L3, L2, capacitors C24, C21, C41 and resistors R29. The multiple pi filter attenuates ripple and switching spikes in the signal supplied to the transistor Q13 which produces the high voltage output V+ +. A resistor R64 connects the base of the transistor Q13 to the emitter and to the resistor U29. The base is also connected to the collector of the transistor Q14 by a resistor R65. The base of the transistor Q14 is connected to the + 15 volt supply by a resistor R67 and to ground by a resistor R66. The emitter of the transistor Q13 provides a signal HV SENSE which is fed back to the inverting input of the amplifier U12 through a resistor R9. The high voltage output V+ + is produced at the collector of the transistor Q13. The proper biasing of the transistor Q13 is provided by resistor R64 and the biasing circuit comprising the transistor Q14, resistors R67, R66, R65.

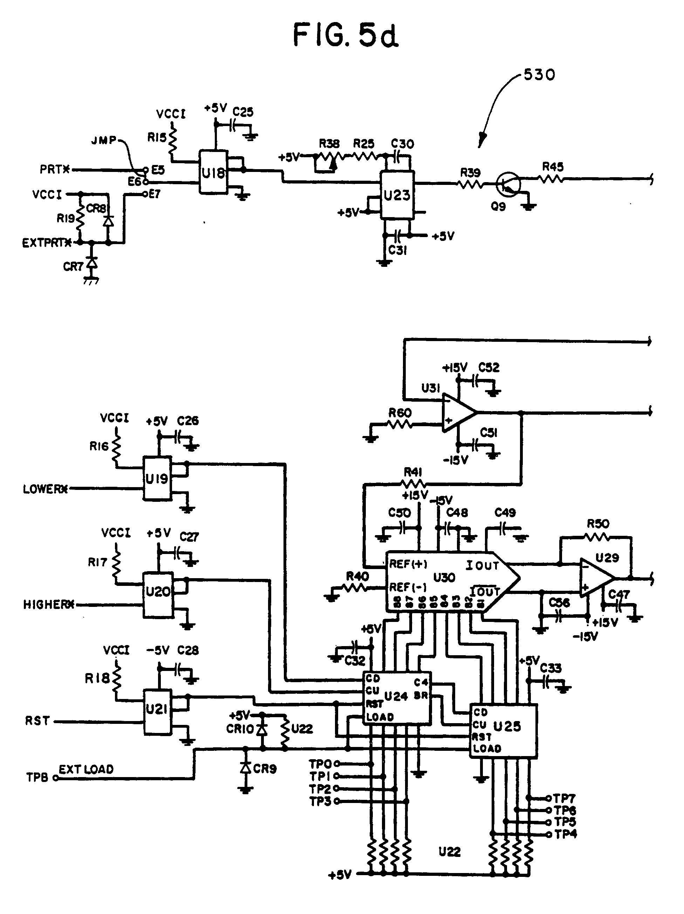

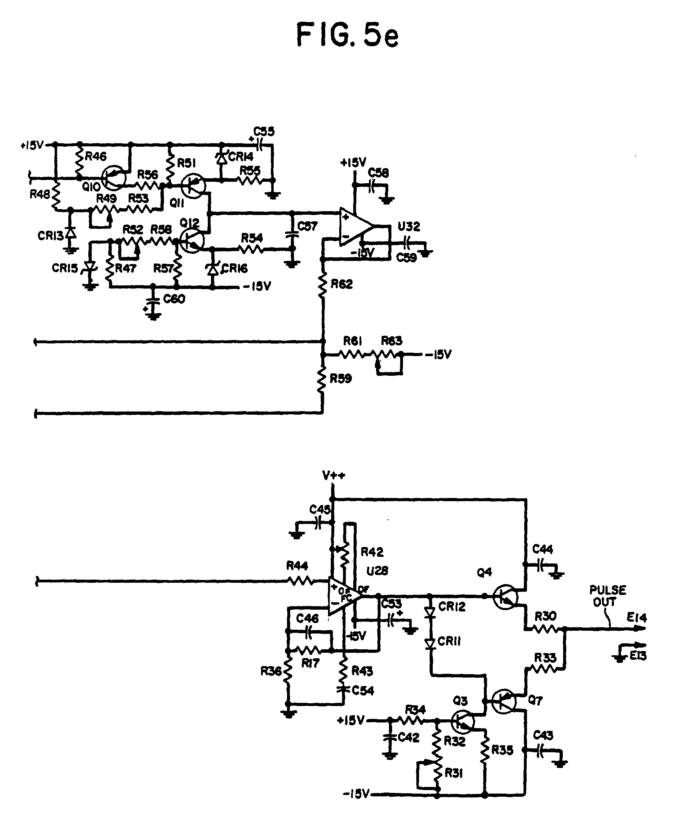

The pulse generator 530, shown in Figs. 5d, 5e, comprises an opto-isolator U18, a one-shot U23, a digital to analog (D/A) converter U30 and two binary counters U24, U25. The pulse generator 530 accepts control signals PRT*, LOWER*, HIGHER*, RST and produces the activation pulse which is applied to the transducer 434. In normal operation, the PRT* control signal is supplied to the opto-isolator U18 by a jumper JMP between contact points E5, E6. The opto-isolator U18 is of conventional design and comprises a light emitting diode (LED) circuit and a photo-element circuit. A resistor R15 operates as the load resistor for the LED circuit of the isolator and a capacitor C25 suppresses transient noise on the voltage supply to the isolator U18. The output of the isolator U18 is applied to one input of the one-shot U23 whose time constant is adjustably determined by resistors R38, R25 and a capacitor C30. The pulse from the non-inverting output of the one-shot U23 is fed to the base of a transistor Q9. A resistor R39 sets the approximate base current of the transistor Q9 which is used as a level shifter for converting the CMOS signal level to the +15 volt DC signal level.

The control of the rise and fall rates of the pulse generator 530 is accomplished by directing a pair of current source transistors Q11, Q12 to charge and discharge a capacitor C57. The transistor Q11 is operative as a source of current and the transistor Q12 is operative as a sink for current. A transistor Q10 controls the level of the current by applying an appropriate bias current through a resistor R56 to the base of the transistor Q11. The biasing of the transistors Q11, Q12 is critical to the proper rise and fall rates. Therefore precision voltage references CR13, CR15 are used to provide respective bias reference voltages. A temperature compensation network is formed from zener diodes CR14, CR16 and resistors R55, R54 to maintain stable operation of the transistors Q11, Q12, respectively. The variable resistors R49, R52 may be used to adjust the fall time and rise time, respectively, of the output pulse applied to the reagent jetting head 400. A plurality of resistors R45, R46, R47, R48, R49, R51, R52, R53, R56, R57, R58 are used to properly bias the transistor Q10, Q11, Q12 and capacitors C55, C60 are circuited to maintain stability of the circuit.

The impedance of the output stage of the rise and fall circuitry Q10, Q11, Q12 is very high. With such a high impedance, circuit elements attached to the capacitor C57 could affect the linearity of the rise and fall time constants. Therefore, an FET input operational amplifier U32 is used as an impedance interface. The amplifier U32 is configured in the noninverting mode and circuited with capacitors C58, C59 for stability.

The output of the amplifier U32 is applied to an inverting amplifier U31 by means of a resistor R62. The amplifier U31 inverts and conditions the pulse control signal with the aid of resistors R59, R60. Resistors R61, R63, connected to the -15 voltage supply, provide a means for adjusting the DC level offset of the amplifier U31 output signal. Capacitors C51, C52 are connected to enhance the performance and stability of the circuit.

The output of the amplifier U31 is applied by means of a resistor R41 to the positive voltage reference signal input REF( +) of the D/A converter U30. The negative voltage reference signal input REF(-) is tied to ground by a resistor R40. The D/A converter U30 produces output signals IOUT, IOUT* which are proportional to the difference between the positive and negative voltage reference signal inputs REF(+), REF(-). Capacitors C48, C49, C50 are connected to the D/A converter U30 to enhance stability.

The D/A converter outputs IOUT, IOUT* are also proportional to an 8-bit binary value applied to inputs B1-B8. The binary value is supplied by the counters U24, U25 which are controlled by the function signals LOWER*, HIGHER* and RST. The LOWER* signal and the HIGHER* signals are applied to the count up and count down inputs CU, CD of the counter U24 by means of opto-isolators U19, U20. The carry and borrow outputs CY, BR of the counter U24 are connected with the count up and count down inputs CU, CD of the counter U25. The reset inputs RST of both counters U24, U25 receive the RST signal by means of an opto-isolator U21. Resistors R16, R17, R18 are used as load resistors for the LED circuits of the isolators U19, U20, U21 and capacitors C26, C27, C28 are used to enhance the stability of the isolator circuits.

The counters U24, U25 may optionally be preloaded to the selected 8-bit binary value through input lines TP0-TP7. The input lines TP0-TP7 are normally biased to the logical high signal state by resistive network U22. The selected binary value is loaded into the counters U24, U25 by pulling the respective inputs TP0-TP7 low and applying an external, active low, load signal EXT LOAD to pin TP8. The load signal pin TP8 is connected to the load inputs LOAD of the counters U24, U25 and conditioned by a clipping circuit comprised of diodes CR9, CR10 and a pull-up resistor of the resistor network U22.

The noninverted and the inverted outputs IOUT, IOUT* are connected to the inverting and non-inverting inputs of a differential amplifier U29. The output of the amplifier U29 is fed back to the inverting input by a resistor R50. The amplifier U29 converts the current output of the D/A converter U30 to a voltage output. Capacitors C56, C47 are provided to enhance circuit stability.

The output of the amplifier U29 is applied to the noninverting input of the amplifier U28. The output of the amplifier U28 is fed back to the inverting input by means of a capacitor C46 and a resistor R37. The inverting input is also connected to ground by a resistor R36. To enhance the frequency response of the amplifier U28, a resistor R43 and a capacitor C54 are connected between the frequency compensation input FC and ground. An adjustable DC offset is provided by connecting the output offset inputs OF, OF with a variable resistor R42. The wiper of the resistor R42 is connected to the high voltage power supply output V+ +.

The output of the amplifier U28 is also connected to the base of a transistor Q4 and through diodes CR11, CR12 to the base of a transistor Q7. The transistor Q4, Q7, Q3 and resistors R30-R35 form an output circuit capable of driving high capacitive loads at high slew rates and wide bandwidth. The variable resistor R31 may be used to set the maximum current through the bias network R30, R33 by measuring the voltage drop across resistor R35.

The strobe generator 560 produces a strobe pulse and comprises transistors Q101-Q105 and a one-shot circuit U108. The strobe intensity is determined by the circuit comprising the transistors Q101-Q104 and resistors R109-R115. The circuit is connected to the anode of the LED 900 and receives two inputs from the interface unit 600 to produce four levels of light intensity in the LED 900.

The activation aand duration of activation of the LED 900 is determined by the one-shot U108 and the transistor Q105. The one-shot U108 comprises inputs A, B and an output Q. The strobe signal STROBE is applied to the B input from the interface unit 600. The duration of the one-shot U108 output pulse is controlled by the adjustable RC network R107, R108. The output Q is applied to the base of the transistor Q105 by resistor R108. The collector of the transistor Q105 is connected to the cathode of the LED 900 to draw current through the LED 900.

The computer 700, control unit 500 and plotter 800 must be initialized. The initialization of the computer 700 and the plotter 800 will not be discussed since these units are of conventional design and operation.

To initialize the jetting head control unit 500, the computer 700 directs the interface unit 600 to issue a reset command. The reset signal RST is conducted to the control unit 500 whereupon the counters U24, U25 are cleared. The computer 700 then retrieves from its memory, or by conventional operator input, the desired digital setting for the D/A converter. This setting may also be calculated from data and may be tailored to specific sizes of jetting heads 400 or reagent fluids. The computer 700 then issues a series of commands, through the interface unit 600, to increment or decrement the counters U24, U25 to correspond to the desired binary setting. If the command directs that the counters are to be raised, then the HIGHER* signal is applied through the opto-isolator U20 to the count up CU input of the counter U24. Similarly, if the command directs that the counters are to be lowered then the LOWER* signal is applied through the opto-isolator U19 to the count down CD input of the counter U24. Since the carry and borrow outputs CY, BR of the counter U24 are connected to the count up and count down inputs CU, CD, respectively, of the counter U25, the digital setting applied to the D/A converter U30 may range from 0 to 255. Alternately, the counters U24, U25 could be initialized to a desired setting by loading the binary value on the lines TP0-TP7 and strobing the EXT LOAD line.

Once the control unit 500 and the plotter 800 are initialized, the printing cycle may begin. The computer 700 issues a command to the interface unit 600 to produce the series of PRT* signal pulses. The computer 700 then commands the plotter 800 to print, for example, a line along a selected path. The plotter 800 positions the jetting head 400 and target 1 and issues the pen down signal PENDN. The signal is delayed by the print control circuit 510 to ensure that the target 1 is properly positioned. At the expiration of the delay, the signal is ANDed with the closed enable switch S1 and the series of print pulses PRT*. The result of the AND operation is the application of the PRT* pulses to the pulse generator circuit 530.

The PRT* signal is applied through the jumper JMP to the opto-isolator U18 and then to the one-shot U23. The one-shot U23 produces a pulse signal which is then converted from CMOS signal levels to the 15 volt DC signal level by the transistor Q9. The rise and fall circuitry comprising Q10, Q11, Q12 converts the square wave pulse into a pulse having the rise and fall characteristics preset by the resistors R49, R52. The conditioned pulse is then amplified by the amplifier U32 and applied to the amplifier U31.

The amplifier U31 converts the polarity of the conditioned pulse to that acceptable by the D/A converter U30 and supplies an adjustable DC offset. The DC offset is used to counteract possible distortion attributable to the amplifier U31. The distortion arises in that, for the amplifier U31 to be adequately responsive, a small degree of current must flow through the resistor R41. This current creates an offset condition at the output of the amplifier U29 which is then scaled by the D/A converter U30 in correspondence with the binary data. The resistor R63 allows a small amount of current to be applied to the amplifier U31 to control the offset voltage attributable to the current flowing through the resistor R41.

The D/A converter U30 scales the difference between the inputs REF(+), REF(-) using the binary data supplied to input lines B1-B8 to produce a current output pulse IOUT and a current inverted output pulse IOUT*. The two outputs IOUT, IOUT* are fed to the amplifier U29 which convert the current outputs into a single voltage output. The scaled, conditioned pulse is then applied to the output circuit comprising the amplifier U28 and the transistors Q3, Q4, Q5, Q6, Q7. The circuit produces a high voltage pulse with the aforementioned rise and fall characteristics to drive the piezo-electric transducer 434.

The high voltage pulse is applied to the transducer 434 and causes a droplet 2 of fluid to be propelled onto the target 1. Since the pen down signal PENDN is still applied, additional droplets 2 are produced from the jetting head 400. The plotter 800 moves the jetting head 400 and target 1 along the desired path during the emission of the droplets 2 to produce the desired printed line. When the printing is complete, the plotter 800 removes the pen down signal PENDN and the droplet emission stops. Of course it should be understood that dots, circles and the like could be produced by appropriate positioning of the target 1 and jetting head 400.

The size and uniformity of the droplets 2, as well as the presence of any satelite droplets, may be observed with the aid of the scope 950 and the LED 900. The scope 950 and the LED 900 are positioned such that the droplets 2 pass between the scope 950 and the LED 900 and within the focal range of the scope 950. The strobe pulse when applied to the LED 900 causes the LED 900 to momentarily flash. The timing of the activation and the width of the pulse may be adjusted such that the flash occurs when the fluid, expelled in response to the high voltage pulse, is between the scope 950 and the LED 900. The dispensed quantity of fluid may then be observed in flight or at or near the momement of separation from the orifice 433. Corrections based on the observation may then be made to the system 10.

Since each droplet 2 is small in volume, the droplet 2 may be rapidly absorbed by the target 1, thereby allowing rapid and precise placement of a variety of reagents on the target 1 with reduced drying time and reduced potential of fluidity mixing. In addition, the ability to place small droplets 2 in a precise manner enables the target 1 to be printed in a high density matrix with a variety of reagents as isolated matrix elements.

In some printing applications, particularly when printing fluids of flow viscosity and surface tension, it may be desirable to force the fluid through the jetting tube 432 under pressure and allow the vibrations produced by the transducer 434 to break the emitted fluid stream into precise droplets 2. Under this mode of printing, the emission of droplets 2 can not be stopped by cessation of the tranducers activation pulse. It is therefore necessary to prevent fluid emission by other means. One preferred means of momentarily stopping emission of the droplets is shown schematically in Fig. 4. In this arrangement, structure similar to structure represented in Fig. 3 in form and function, is represented by like reference numerals.

The arrangement, generally represented by the numeral 20, includes a closed reagent recirculation system comprising a normally close three way valve 970, a sump 960 and a recirculation pump 980. In the continuous mode, the reagent fluid is forced out the orifice 433 by hydraulic pressure and broken into a series of substantially uniform droplets 2 by movement of the transducer 434. A regulated, filtered air supply 100 is used to pressurize the reagent fluid reservoir 200. The reagent fluid within the reservoir 200 may optionally be agitated by a magnetic stirer unit 990. This is especially useful for reagent fluids comprising suspended particles.

The three-way valve 970 comprises a common channel, a normally open channel and a normally closed channel. The fluid is forced through the filter 300 and applied to the normally closed channel of the valve 970. When the normally closed channel is closed, the normally open channel of the valve 970 functions as a vent for the reagent jetting head 400. The common channel is connected to the reagent supply tube 430 of the jetting head 400. The reagent supply tube 430 is also connected to the sump 960.

In operation, the normally closed channel is opened by an appropriate signal supplied by the computer 700 which also closes the normally open channel. When the normally closed channel is opened, fluid is permitted to pass to the sump 960 and to the jetting head 400. The sump 960 collects the reagent fluid not transferred to the jetting head 400. The sump 960 supplies the collected fluid to the inlet side of the recirculating pump 980 which returns the fluid to the reservoir 200. The returned fluid is then mixed with the contents of the reservoir 200 and is available for recirculation.

When operating in the continuous mode, rather than interrupt the continuous stream of print pulses to the jetting head 400, the printing may be momentarily stopped by closing the normally closed channel of the valve 970. The closing of the normally closed channel stops the flow of reagent fluid to the jetting head 400 and allows the jetting head 400 to vent to atmospheric pressure. With the fluid supply blocked, the transducer 434 is unable to expel further droplets 2. Thus, if positioning of the target 1 by the plotter 800 requires a longer time interval than the time between droplet 2 emission, the computer 700 may close the normally closed channel of the valve 970. The plotter 800 may then position the target 1 or position a new target 1 as desired.

When printing, the active ingredient of the reagent is tailored to achieve a desired concentration per unit area on the target 1. However, to a certain extent the final concentration per unit area can be adjusted by varying the density of the droplets 2 printed on the target 1. The printing system is particularly well suited to this application due to its ability to print precise, discrete pels of reagent.

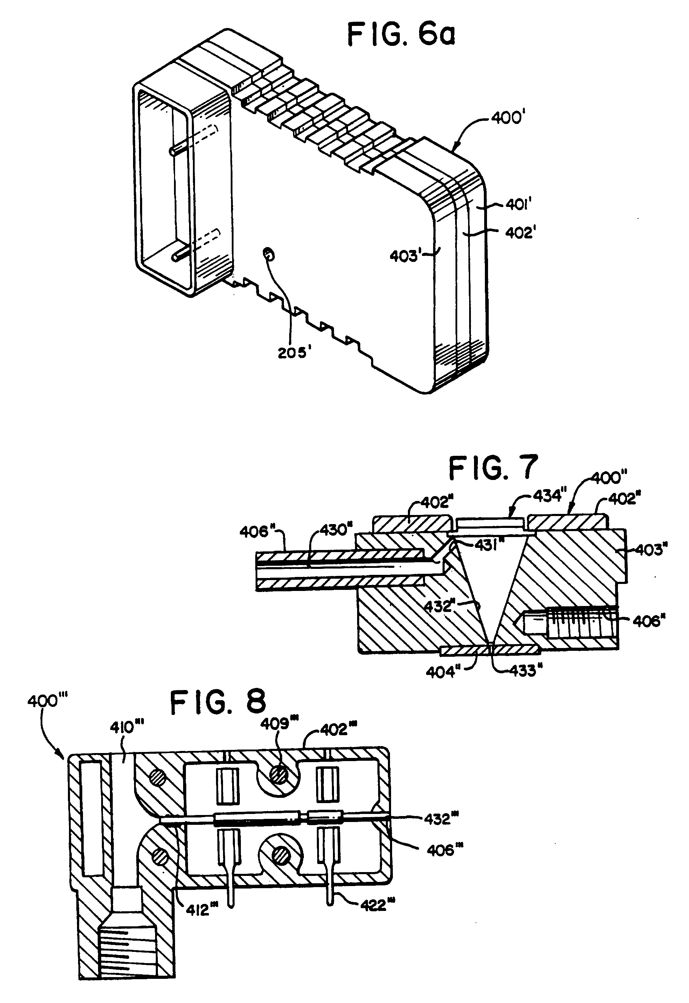

A second preferred embodiment of the jetting head is illustrated in Figs. 6a-6b and is generally represented as 400'. The jetting head 400' comprises housing formed into three sections 401', 402', 403'. The housing section 403' comprises a recessed region which forms the reagent fluid reservoir 200' when the housing section 403' is positioned against housing section 402'.

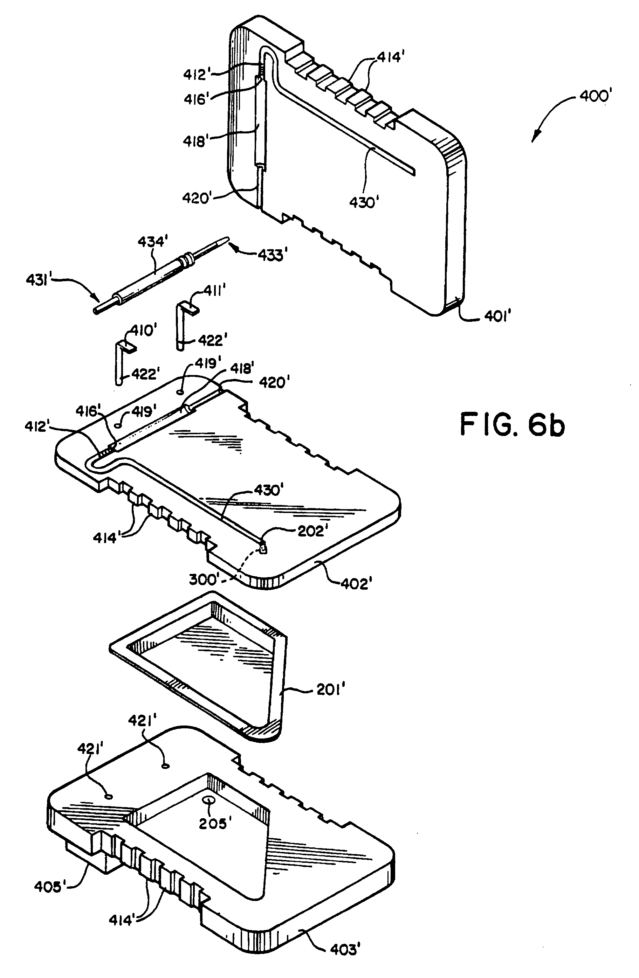

The jetting head 400' further comprises a piezo-electric transducer 434' and a reagent jetting tube 432' similar to those of the first embodiment. The jetting head 400' and the transducer 434' are most clearly shown in Fig. 6b. The jetting tube 432' defines an orifice 433' at one end and a reagent fluid receiving aperture 431' at the other end. The transducer 434' is mounted to the jetting tube 432' concentrically about the mid-region of the tube 432' with epoxy.

The transducer 434' and the jetting tube 432' are positioned in channels 420', 418', 416' located in the housing sections 402', 401'. The channel 416' comprises a plurality of sealing teeth 412' operative to engage and seal against the fluid receiving end 431' of the jetting tube 432'. The channel 416' is connected to the reagent fluid supply channel 430'. The supply channel 430' is connected with the fluid reservoir 200' by means of an aperture 431' through the housing section 402', shown in Fig. 6b.

The reservoir 200' comprises a flexible reservoir lining 201' adapted to contain the reagent fluid. The lining 201' comprises one aperture which is connected to the housing 402' to allow the fluid to pass from the lining 201'. A vent (not shown), located in the housing 403', allows the space between the reservoir 200' and the lining 201' to be vented or pressurized. A filter 300' is positioned within the aperture 202' to trap unwanted particulate foreign matter.

Electrical pulses are supplied to the transducer 434' by means of two contact pins 422'. The pins 422' are inserted through respective apertures 419' of the housing section 402' and respective apertures 421' of the housing section 403'. Two thin electrically conductive strips 410', 411', shown in Fig. 6b, are used to connect the transducer 434' with the contact pins 422'. A protective shield 405' extends from the housing position 403' to partially isolate the protruding portions of the contact pins 422'.

The function and operation of the jetting head 400' is similar to that of the jetting head 400 and therefore will not be discussed in detail. The collapsible inner lining 201' of the reservoir 200 allows the jetting tube 432' to be primed by pressurizing the reservoir 200' through the vent 205'. Once primed, the jetting head 400' may be used as described above in reference to the jetting head 400.

The jetting head 400' provides an advantage in that the entire fluidic system is contained in one housing. Such containment allows for fast and efficient replacement of the jetting heads without fluid contamination problems.

A third preferred embodiment of the jetting head is shown in Fig. 7 and generally represented as 400". The jetting head 400" comprises a housing 403", a reagent fluid supply tube 406", a piezo-electric transducer 434" and an orifice plate 404". The housing 403" defines a conically shaped fluid chamber 432". An orifice plate 404", defining an orifice 433", is fastened to the housing 403" such that the orifice 433" is located at or near the apex of the conical fluid chamber 432".

The fluid feed tube 406" is attached to the housing 403" and defines a supply channel 430". The supply channel 430" is in fluid communication with the fluid chamber 432" by means of a connecting channel 431". The base of the fluid chamber 432" is formed by the disc-shaped transducer 434". The transducer 434" is held in position by a hold down plate 402" attached to the housing 403". The electrical connections to the transducer 434" are of conventional design and are therefore not shown. The housing 403" further comprises a threaded aperture 406" for mounting the jetting head 400".

The jetting head 400" operates in a manner similar to the jetting heads described above. However, in this jetting head the transducer 434" is normally disk shaped. When the electrical pulse is applied, the transducer 434" bends slightly, thereby altering the volume of the conically shaped jetting chamber 432". The change in volume of the chamber 432" causes the expulsion of fluid through the orifice 433" and the intake of fluid through the supply channel 430" as described in reference to the jetting head 400.

A fourth preferred embodiment of the jetting head is shown in Fig. 8 and is generally represented as 400"'. The jetting head 400"' is very similar in form and function to the jetting head 400 and will not be described in detail. The jetting head 400 comprises two symmetrical housing sections. The sections may be connected together by means of apertures 409"' and screws, not shown. When assembled, the housing sections 404"', 402"' form a T-shaped supply channel 410'".

In operation, the jetting head 400"' functions in a manner similar to the jetting head 400. The jetting head 400"' is especially suited for use in the continuous mode, but may also be used in the drop on demand mode. In the continuous mode, the fluid is circulated continuously through the supply channel 430"' allowing the jetting tube 432"' to withdraw as much fluid as required.

By way of illustrating and with no limitations intended the following information is given to further illustrate the above described embodiments. The computer 700 is an IBM Corporation Personal Computer with 640 kbytes of RAM memory. The interface unit 600 is a Burr Brown interface unit model number PC 20001. The plotter 800 is manufactured by Houston Instrument as model number DMP-40. Communication between the plotter 800 and the interface unit 600 is performed through a standard asynchronous serial communication port.

The electrical pulse applied to the jetting head 400 to activate the transducer 434 comprises a rise time of approximately 5 usecs, a fall time of approximately 5 usecs and a pulse width of approximately 35 usecs. When the transducer 434 is operated in the drop on demand mode, the voltage potential of the pulse is 60 volts plus or minus 10 volts and the pulse frequency can be up to 4 khz. When the transducer 434 is operated in the continuous mode, the voltage potential of the pulse is 30 volts plus or minus 10 volts and the pulse frequency can be up to 10 khz.

The jetting tube 432 is manufactured from a pyrex glass tube and measures 0,6858 mm (.027 inches) outside diameter and 0,508 mm (.020 inches) inside diameter. The tube is drawn to a closed taper in an electric furnace. The tapered end is then cut and ground to a desired orifice opening of 0,0508 to 0,1016 mm (.002 to .004 inches) in diameter. The tube is cut to a final length of 24,003 mm (.945 inches) in the case of the dispenser embodiment and ultrasonically cleaned in acetone. After being cleaned and dried the large end of the tube is fire polished. If desired, the orifice end of the tube may receive a coating, such as a hydrophobic polymer, to enhance droplet separation from the tube.

The supply tube 430 is formed from 0,5842 mm (.023 inch) inside diameter and 9,652 mm (.38 inch) outside diameter polyethylene tubing produced by Intramedic Corp. as model number #14 170 11B. During assembly, one end of the tubing is stretched over a warm tapered mandrel. The stretched end of the supply tube 430 is then inserted over the large fire polished end of the jetting tube 432. The assembly is then cleaned and baked in a circulating air oven at 50°C. for 10 minutes.

The transducer 434 was purchased from Vernitron of Cleveland, Ohio as model number PZT-5H. The electrodes 437, 436 are comprised of nickel and are separated from each other on the outer surface of the transducer by approximately 0,762 mm (.030 inches). The jetting tube 432 is inserted into the cylindrical piezoelectric tube 434 and secured with epoxy manufactured by Epoxy Technology of Bellerica, Massachusetts as model number 301. The epoxy is applied at the junction of the tube 432 and transducer 434 with a syringe. The epoxy flown along the tube 432 inside the transducer 434 by capillary action. The assembly is then baked in a circulating air oven at 65°C. for one hour to cure the epoxy.

The contact pins 422 are secured to one of the housing sections 402, 404 with a drop of epoxy. The transducer jetting tube 434, 432 is placed in the housing such that the orifice end 433 of the tube 432 protrudes approximately 0,762 mm (.030 inches) from the housing 402, 404. A drop of silver epoxy is placed between each contact pin 422 and the transducer 434 to ensure a secure electrical connection. Epoxy is also applied to the junction of the housing 402, 404 and supply tube 430. The other section of the housing 402, 404 is then screwed into place.

The periphery of the housing 402, 404 is sealed with a capillary sealer such as cyclohexanone. Epoxy is then added around each contact pin 422 and around the orifice end 433. The assembly is then baked in a circulating air oven at 65 °C. for one hour.

The filter 300 is formed from a polyester mesh with 20 um pores and positioned in a polypropylene housing. The air pressure supplied to the reservoir 200 during continuous printing operations is regulated at approximately 6,897 × 10⁴ N/m² to 20,697 × 10⁴ N/m² (10 to 30 psi).

The reagents used have the following characteristics:

| Printing (drop on demand mode): | |
|---|---|
| Fluid viscosity range | 1 - 30 centipoises |
| Fluid surface tension | 20 - 70 dyne/cm |

| Printing (continuous mode): | |
|---|---|
| Fluid viscosity range | up to 50 centipoises |
| Fluid surface tension | not measured |

| Dispensing (drop on demand mode): | |
|---|---|
| Fluid viscosity range | 2 - 30 centipoises |
| Fluid surface tension | 20 - 70 dyne/cm |

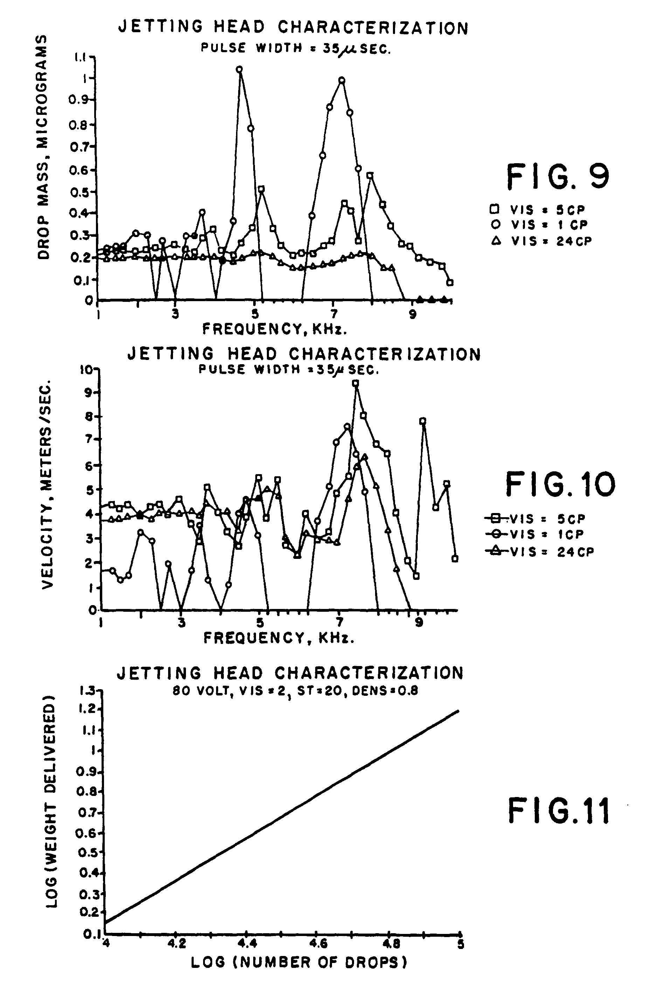

A measure of the performance and selected operating characteristics for a typical jetting head are presented in Figs. 9-11. Fig. 9 is a graph of the mass of a droplet as a function of droplet emission frequency for three fluids. The viscosity of the fluids were 1, 5 and 24 centipoise and the transducer excitation pulse width was 35 microseconds. As shown in Fig. 9, the higher fluid viscosity results in a more stable operating performance of the jetting head. Fig. 10 is a graph of droplet velocity as a function of droplet emission frequency for fluid viscosities of 1, 5 and 24 centipoise. The log of the total fluid weight as a function of the log of the number of droplets emitted is shown in Fig. 11. The fluid used had a viscosity of 2 centipoise, a surface tension of 20 dynes/cm, and a density of .8 grams/cc. The transducer excitation pulse was 80 volts and the excitation frequency was approximately 711 Hz.

Some blood typing reagents and some allergen reagents have very low viscosities and surface tensions. Although in some cases viscosity modifiers, such as glycerol, dextran, glucose, and the like, may be added to increase the viscosity, a few reagents are adversely affected by such modifiers.

Developing stable and reproduceable demand mode jetting is difficult with very low viscosities. Although droplet emission can be established at some fundamental frequencies, the droplets dispensed may have small satelite droplets which reduce the accuracy for metering and dispensing applications. However, even with the satelite drops, sufficient reagent is adequately delivered for most print applications without a substantial decrease in print quality.

Glycerin may be used as a viscosity modifier to improve jetting reliability and to prevent obstruction of the orifice arising from evaporation of the reagent fluid components. Glycerin has been found especially beneficial for those reagents containing particulate material. The evaporation of the fluid component results in a concentration of glycerin located at the orifice. The plug of glycerin substantially prevents further evaporation of the reagent fluid. During the next activation cycle of the transducer, the plug of glycerin is expelled from the orifice.

When operating in the dispensing mode the volume of the droplets can be varied to substantially uniformly contain from 100 pico-liters to 1 micro-liter. The droplets can be produced at a rate of approximately 1 khz to 8 khz.

The values, manufacturer and manufacturing part number of the circuit components of the jetting control unit 500 are substantially as follows:

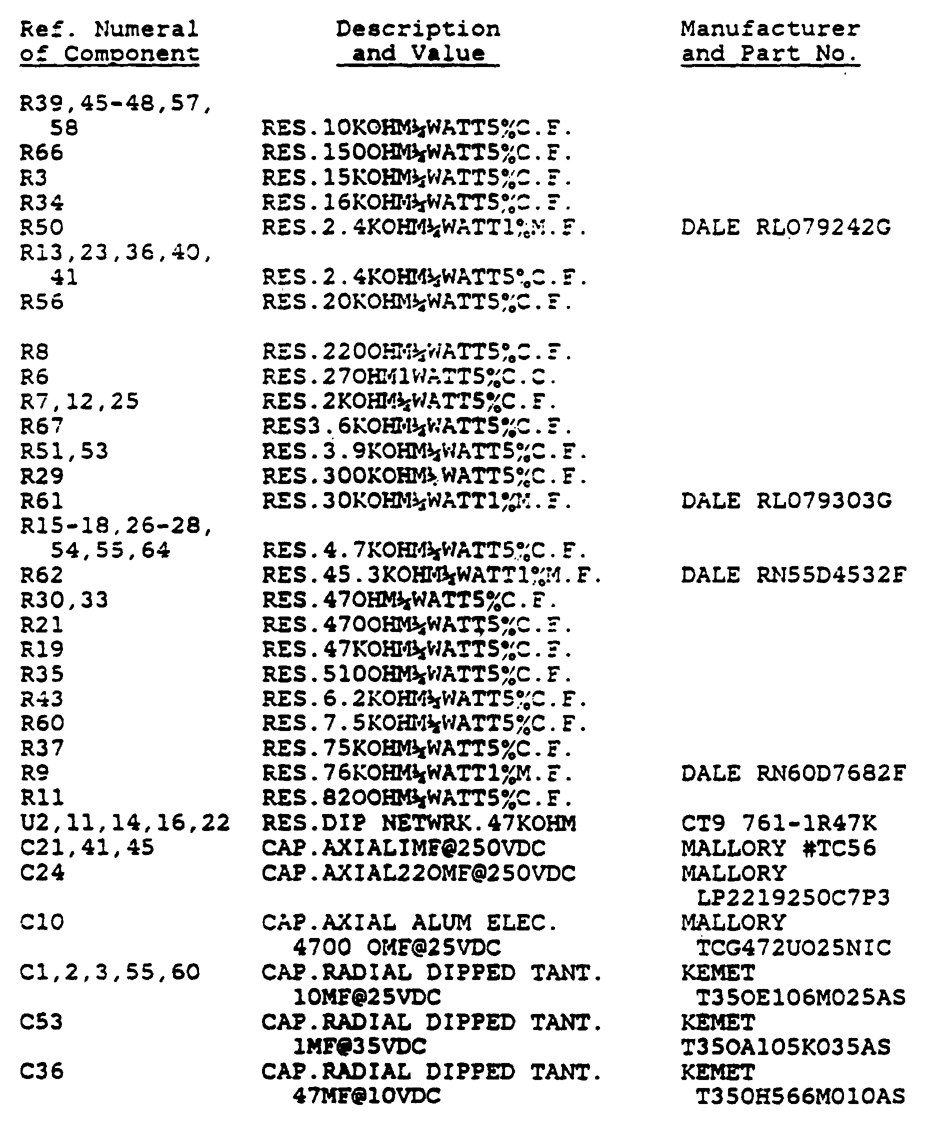

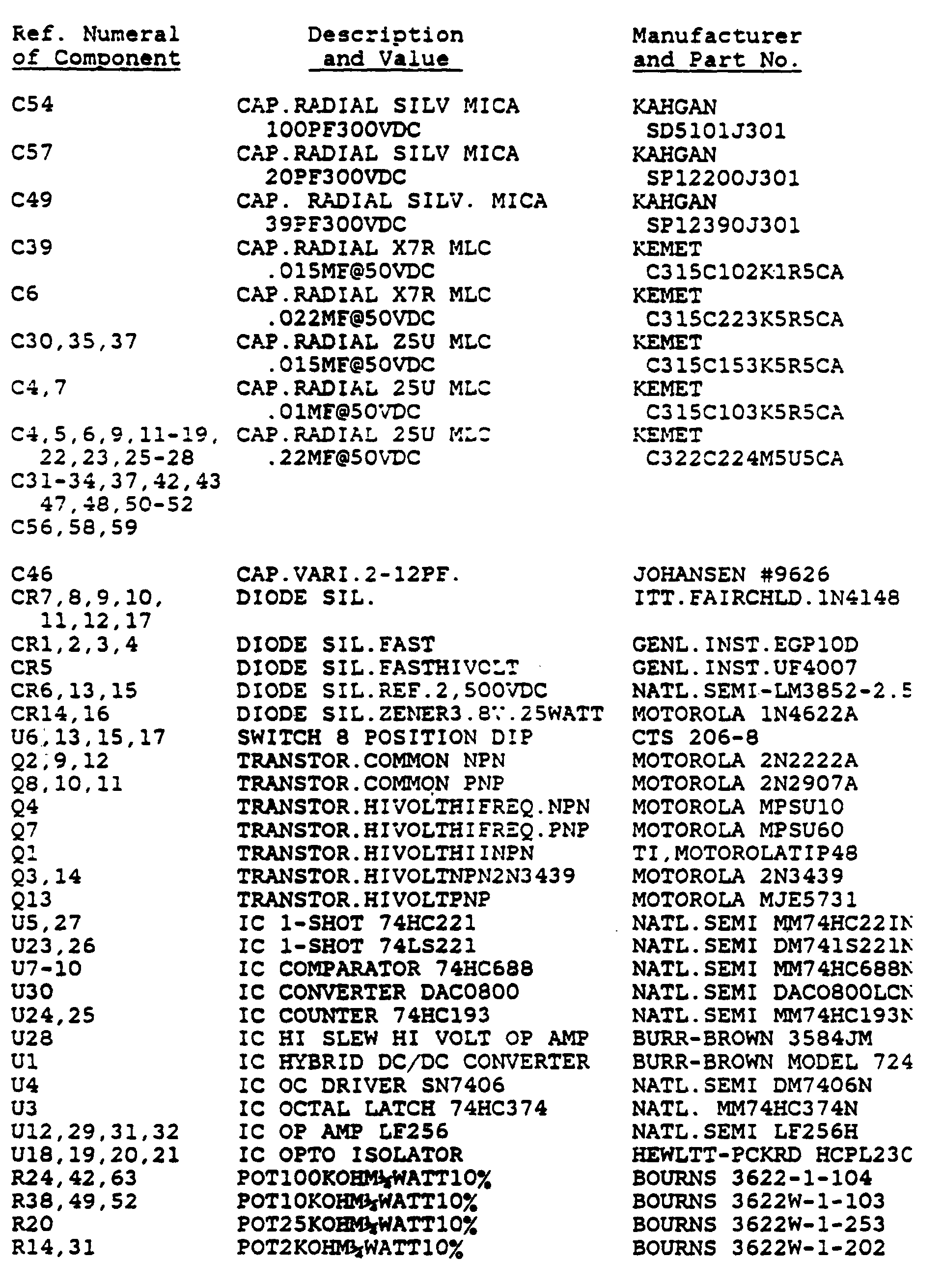

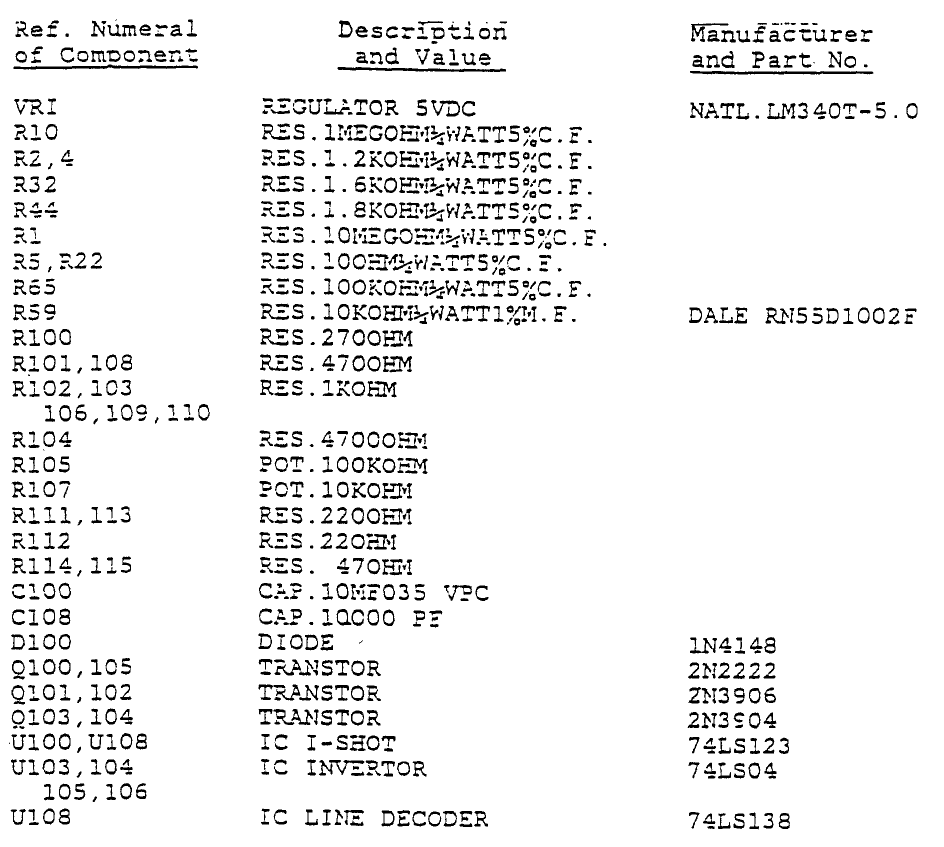

Of course, it should be understood that a wide range of changes and modifications can be made to the preferred embodiments described above. For example, the transducer could be of a type other than piezo-electric such as magneto-strictive, electro-strictive, and electro-mechanical. It is therefore intended that the foregoing detailed description be regarded as illustrative rather than limiting, and that it be understood that it is the following claims, including all equivalents, which are intended to define the scope of this invention.

Where technical features mentioned in any claim are followed by reference signs, those reference signs have been included just for the sole purpose of increasing intelligibility of the claims and accordingly, such reference signs do not have any limiting effect on the scope of each element identified by way of example by such reference signs.

## Claims

1. A diagnostic apparatus comprising a dispensing system emitting uniform, controllably sized droplets in the range of 100 pico-liters to 1 micro-liter of a wide variety of diagnostic reagent fluids, the system comprising:
a jetting chamber (432) defining a volume and comprising a first and second aperture (431, 433), the first aperture (431) adapted to receive a diagnostic reagent fluid, the second aperture (433) defining an orifice;
an electro-acoustic transducer (434) in mechanical communication with the jetting chamber (432), the transducer (434) being operative alternately to expand and de-expand the volume of the jetting chamber (432) in response to a selected electrical pulse, thereby alternately creating an acoustic expansion wave and a compression wave in the fluid, the compression wave being sufficient to emit a droplet of the fluid through the orifice (433);
means (500) for generating a number of electrical pulses sufficient to cause a desired quantity of the fluid to be dispensed said generating means (500) being adapted for generating electrical pulses causing the volume defined by the jetting chamber to expand by an amount sufficient to intake a small quantity of the reagent supply;
means (530) for varying the characteristics of the pulses, wherein the characteristics are selected from the group consisting of rise time; rise time and fall time; rise time, fall time and width; or rise time, fall time, width and amplitude;
at least one additional jetting chamber (432) in fluid communication with an additional diagnostic reagent fluid;
at least one additional transducer (434) in mechanical communication with the additional jetting chamber (432);
at least one additional means (500) for applying an electrical pulse of predetermined characteristics to the additional transducer;
means (530) for generating respective numbers of electrical pulses sufficient to cause precise quantities of the diagnostic reagent fluids to be dispensed in a desired volumetric ratio; and
a receptacle (904) adapted for and positioned to receive the fluids.
- means (530) for varying the characteristics of said pulses, wherein said characteristics are selected from the group consisting of rise time; rise time and fall time; rise time, fall time and width; or rise time, fall time, width and amplitude,
- at least one additional jetting chamber (432) in fluid communication with an additional diagnostic reagent fluid;
- at least one additional transducer (434) in mechanical communication with the additional jetting chamber (432);
- at least one additional means (500) for applying an electrical pulse of predetermined characteristics to the additional transducer;
- means (530) for generating respective numbers of electrical pulses sufficient to cause precise quantities of the diagnostic reagent fluids to be dispensed in a desired volumetric ratio; and
- a receptacle (904) adapted for and positioned to receive the fluids.

2. The diagnostic apparatus according to claim 1, **characterized in that** one of the diagnostic reagent fluids comprises serum and **in that** the jetting chambers (432) cooperate such that the other diagnostic fluid is emitted in a manner to contact and mix with the serum.

3. The diagnostic apparatus according to one or more of claims 1 to 2, **characterized in that** the jetting chamber (432) comprises a cylindrical tube (435) and **in that** the transducer (434) is mounted concentrically about said cylindrical tube.

4. The diagnostic apparatus according to one or more of claims 1 to 2, **characterized in that** the jetting chamber (432) is conically shaped.

5. The diagnostic apparatus according to one or more of claims 1 to 2, **characterized in that** the jetting chamber (432) comprises at least one chamber wall (435) which is integrally formed with the transducer (434).

6. The diagnostic apparatus according to one or more of claims 1 to 3, **characterized in that** the transducer (434) is disc shaped and forms the base of the conically shaped jetting chamber (432).

7. The diagnostic apparatus according to one or more of claims 1 to 6, **characterized in that** the orifice (433) comprises an end face which is coated with a hydrophobic polymer.

8. The diagnostic apparatus according to one or more of claims 1 to 5, **characterized in that** the transducer (434) is cylindrically shaped and comprises a first electrode (437) located on the inner wall of the cylinder (435) which wraps around one end of the cylinder (435); and **in that** a second electrode. (436) is located substantially on the outer wall of the cylinder (435) and is electrically isolated from the first electrode (437).

9. The diagnostic apparatus according to one or more of claims 1 to 8, **characterized in that** the apparatus further comprises means (902) for directing or deflecting the emitted diagnostic fluid(s) along a desired path.

10. The diagnostic apparatus according to one or more of the preceding claims, **characterized in that** it further comprises means (906) for detecting the results of a reaction between the diagnostic reagent fluid and the additional diagnostic reagent fluid.

11. The diagnostic apparatus according to one or more of the preceding claims, **characterized in that** the jetting chamber (432) is made of glass.

12. The diagnostic apparatus according to one or more of claims 1 to 11, **characterized in that** it further comprises a collapsible reservoir (200) of diagnostic reagent fluid in fluid communication with the first aperture (431) of the jetting chamber (432), whereby capillary action at the orifice (433) produces a pressure differential between the interior and exterior of the reservoir (200) upon emittance of a droplet from the jetting chamber (432).

13. A method of effecting a diagnostic test with a diagnostic apparatus according to one or, more of the preceding claims of the type including a receptacle, the method comprising the steps of:
(a) positioning the receptacle relative to the orifice (433) of the jetting chambers (432), each of which defines a volume, an orifice and an aperture (410) for receiving diagnostic reagent fluid;
(b) alternately expanding and de-expanding the volumes of the jetting chambers (432) by said electro-acoustic transducer means (434), thereby alternately creating an acoustic expansion and compression wave in the fluids, the compression wave being sufficient to emit said droplets through the respective orifices (433);
(c) generating electrical pulses;
(d) applying the generated electrical pulses to said transducer means (434);
(e) allowing the emitted droplets to be received in the receptacle and
and (f) repeating steps (a) through (d) until said precise quantities of said diagnostic reagent fluids have been dispensed, wherein
step (c) further comprises varying electrical characteristics of said pulses, selected from a group consisting of rise time; rise time and fall time; rise time, fall time and width; or rise time, fall time, width and amplitude, until the emitted droplets of said reagent fluids are of a predetermined and a substantially uniform size.

14. A method of effecting a diagnostic test with a diagnostic apparatus according to one or more of Claims 1 to 12 of the type including a receptacle, the method comprising the steps of:
(a) positioning the receptacle relative to the orifice (433) of the jetting chambers (432), each of which defines a volume, an orifice and an aperture (410) for receiving diagnostic reagent fluid;
(b) pressurizing the reagent fluids into the jetting chambers (432);
(c) alternately expanding and de-expanding the volume of the jetting chambers (432) by electro-acoustic transducer means (434), thereby alternately creating an acoustic expansion and compression wave in the fluids such that to break the pressurized fluid stream into droplets;
(d) generating electrical pulses; and
(e) applying the generated electrical pulses to said transducer means (434), wherein said step (d) further comprises varying electrical characteristics of said pulses, selected from a group consisting of rise time; rise time and fall time; rise time, fall time and width; or rise time, fall time, width and amplitude.

## Patentansprüche

1. Eine Diagnosevorrichtung mit einem Verteilersystem zum Ausstoß von gleichförmigen Tröpfchen regelbarer Größe in einem Bereich von 100 Pikoliter bis 1 Mikroliter einer großen Vielfalt von diagnostischen Reagenzflüssigkeiten, wobei das System folgendes umfasst:
eine Sprühkammer (432), die ein Volumen bestimmt, und die eine erste und zweite Öffnung (431, 433) besitzt, wobei die erste Öffnung (431) zur Aufnahme einer diagnostischen Reagenzflüssigkeit ausgebildet ist und die zweite Öffnung (433) eine Mündung bildet;
einen elektroakustischen Wandler (434) in mechanischer Verbindung mit der Sprühkammer (432), wobei der Wandler (434) betätigbar ist, um wechselweise in Abhängigkeit von einem ausgewählten elektrischen Impuls das Volumen der Sprühkammer (432) zu vergrößern und zu verringern, wodurch wechselweise eine akustische Expansions- und Kompressionswelle in der Flüssigkeit erzeugt wird, wobei die Kompressionswelle ausreicht, um den Ausstoß eines Tröpfchens der Flüssigkeit durch die Mündung (433) zu bewirken;
ein Mittel (500) zur Erzeugung einer Anzahl von elektrischen Impulsen, die ausreichend sind, um zu bewirken, dass eine erwünschte Menge der Flüssigkeit versprüht wird, wobei das Erzeugungsmittel (500) ausgebildet ist, um elektrische Impulse zu erzeugen, die bewirken, dass das von der Sprühkammer bestimmte Volumen um eine Größe expandiert wird, die ausreichend ist, um eine geringe Menge der Reagenzzufuhr anzusaugen;
ein Mittel (530) zur Veränderung der Charakteristika der Impulse, wobei die Charakteristika aus einer Gruppe ausgewählt werden, die aus der Anstiegszeit; Anstiegszeit und Abfallszeit; Anstiegszeit, Abfallszeit und Breite; oder Anstiegszeit, Abfallszeit, Breite und Amplitude bestehen;
zumindest eine zusätzliche Sprühkammer (432) in Flüssigkeitsverbindung mit einer zusätzlichen diagnostischen Reagenzflüssigkeit;
zumindest einen zusätzlichen Wandler (434) in mechanischer Verbindung mit der zusätzlichen Sprühkammer (432);
zumindest ein zusätzliches Mittel (500) zur Anlegung eines elektrischen Impulses mit vorherbestimmten Charakteristika an den zusätzlichen Wandler;
ein Mittel (530) zur Erzeugung einer entsprechenden Anzahl von elektrischen Impulsen, die ausreicht, um genaue Mengen der diagnostischen Reagenzflüssigkeiten, die versprüht werden sollen, in einem erwünschten volumetrischen Verhältnis zu erzeugen; und
einen Behälter (904), der dafür ausgebildet und angebracht ist, um die Flüssigkeiten aufzunehmen.

2. Die Diagnosevorrichtung nach Anspruch 1, **dadurch gekennzeichnet, dass** eine der diagnostischen Reagenzflüssigkeiten Serum umfasst, und dadurch, dass die Sprühkammern (432) derart zusammenwirken, dass die andere diagnostische Flüssigkeit in einer Weise ausgestoßen wird, um mit dem Serum in Kontakt zu treten und sich damit zu vermischen.

3. Die Diagnosevorrichtung nach einem oder mehreren der Ansprüche 1 bis 2, **dadurch gekennzeichnet, dass** die Sprühkammer (432) eine zylindrische Röhre (435) umfasst, und dass der Wandler (434) konzentrisch um die zylindrische Röhre angebracht ist.

4. Die Diagnosevorrichtung nach einem oder mehreren der Ansprüche 1 bis 2, **dadurch gekennzeichnet, dass** die Sprühkammer (432) konisch ist.

5. Die Diagnosevorrichtung nach einem oder mehreren der Ansprüche 1 bis 2, **dadurch gekennzeichnet, dass** die Sprühkammer (432) zumindest eine Kammerwand (435) umfasst, die einstückig mit dem Wandler (434) gebildet ist.

6. Die Diagnosevorrichtung nach einem oder mehreren der Ansprüche 1 bis 3, **dadurch gekennzeichnet, dass** der Wandler (434) scheibenförmig ist und die Basis der konischen Sprühkammer (432) bildet.

7. Die Diagnosevorrichtung nach einem oder mehreren der Ansprüche 1 bis 6, **dadurch gekennzeichnet, dass** die Mündung (433) eine Endfläche umfasst, die mit einem hydrophoben Polymer beschichtet ist.

8. Die Diagnosevorrichtung nach einem oder mehreren der Ansprüche 1 bis 5, **dadurch gekennzeichnet, dass** der Wandler (434) eine zylindrische Form aufweist und eine erste Elektrode (437) umfasst, die sich an der inneren Wand des Zylinders (435) befindet, die ein Ende des Zylinders (435) umschließt; und dadurch, dass eine zweite Elektrode (436) sich im wesentlichen an der äußeren Wand des Zylinders (435) befindet und von der ersten Elektrode (437) elektrisch isoliert ist.

9. Die Diagnosevorrichtung nach einem oder mehreren der Ansprüche 1 bis 8, **dadurch gekennzeichnet, dass** die Vorrichtung weiterhin Mittel (902) zur Leitung und Ablenkung der ausgestoßenen diagnostischen Flüssigkeit(en) entlang eines gewünschten Pfades umfasst.

10. Die Diagnosevorrichtung nach einem oder mehreren der vorhergehenden Ansprüche, **dadurch gekennzeichnet, dass** sie weiterhin eine Vorrichtung (906) zur Erfassung der Reaktionsergebnisse zwischen der diagnostischen Reagenzflüssigkeit und der zusätzlichen diagnostischen Reagenzflüssigkeit umfasst.

11. Die Diagnosevorrichtung nach einem oder mehreren der vorhergehenden Ansprüche, **dadurch gekennzeichnet, dass** die Sprühkammer (432) aus Glas gefertigt ist.

12. Die Diagnosevorrichtung nach einem oder mehreren der Ansprüche 1 bis 11, **dadurch gekennzeichnet, dass** diese weiterhin einen zusammenfaltbaren Behälter (200) mit diagnostischer Reagenzflüssigkeit umfasst, der in Flüssigkeitsverbindung mit der ersten Öffnung (431) der Sprühkammern (432) steht, wobei die Kapillarwirkung an der Mündung (433) ein Druckdifferential zwischen dem Inneren und dem Äußeren des Behälters (200) beim Ausstoß eines Tröpfchens aus der Sprühkammer (432) erzeugt.

13. Verfahren zur Durchführung eines diagnostischen Tests mit einer Diagnosevorrichtung nach einem oder mehreren der vorhergehenden Ansprüche des Typs, der einen Behälter einschließt, wobei das Verfahren folgende Schritte umfasst:
(a) Positionierung des Behälters relativ zur Mündung (433) der Sprühkammern (432), wobei jede ein Volumen, eine Mündung und eine Öffnung (410) zur Aufnahme der diagnostischen Reagenzflüssigkeit bestimmt;
(b) wechselweise Vergrößerung und Verringerung des Volumens der Sprühkammern (432) durch ein elektroakustisches Wandlermittel (434), wodurch wechselweise eine akustische Expansions- und Kompressionswelle in den Flüssigkeiten erzeugt wird, wobei die Kompressionswelle ausreicht, die Tröpfchen durch die entsprechenden Mündungen (433) auszustoßen;
(c) Erzeugung von elektrischen Impulsen;
(d) Anlegung der erzeugten elektrischen Impulse an das Wandlermittel (434);
(e) Zulassung, dass die ausgestoßenen Tröpfchen in den Behälter aufgenommen werden; und
(f) Wiederholung der Schritte (a) bis (d), bis die genauen Mengen der diagnostischen Reagenzflüssigkeiten versprüht sind;
wobei
Schritt (c) weiterhin die Veränderung der elektrischen Charakteristika der Impulse umfasst, die aus einer Gruppe ausgewählt sind, die aus Anstiegszeit; Anstiegszeit und Abfallszeit; Anstiegszeit, Abfallszeit und Breite; oder Anstiegszeit, Abfallszeit, Breite und Amplitude bestehen, bis die ausgestoßenes Tröpfchen der Reagenzflüssigkeit eine vorherbestimmte und im wesentlichen gleichförmige Größe besitzen.

14. Verfahren zur Durchführung eines diagnostischen Tests mit einer Diagnosevorrichtung nach einem oder mehreren der Ansprüche 1-12, des Typs, der einen Behälter einschließt, wobei das Verfahren folgende Schritte umfasst:
(a) Positionierung des Behälters relativ zur Mündung (433) der Sprühkammern (432), wobei jede ein Volumen, eine Mündung und eine Öffnung (410) zur Aufnahme der diagnostischen Reagenzflüssigkeit bestimmt;
(b) Druckbeaufschlagung der Reagenzflüssigkeiten in die Sprühkammern (432);
(c) wechselweise Vergrößerung und Verringerung des Volumens der Sprühkammern (432) durch das elektroakustische Wandlermittel (434), wodurch wechselweise eine akustische Expansions- und Kompressionswelle in den Flüssigkeiten erzeugt wird, so dass der unter Druck stehende Flüssigkeitsstrom in Tröpfchen aufgespalten wird;
(d) Erzeugung von elektrischen Impulsen; und
(f) Anlegung der erzeugten elektrischen Impulse an das Wandlermittel (434); wobei Schritt (d) weiterhin die Veränderung der elektrischen Charakteristika der Impulse umfaßt, die aus einer Gruppe ausgewählt sind, die aus Anstiegszeit; Anstiegszeit und Abfallszeit; Anstiegszeit, Abfallszeit und Breite; oder Anstiegszeit, Abfallszeit, Breite und Amplitude besteht.

## Revendications

1. Appareil de diagnostic comprenant un système de distribution émettant des gouttes de taille uniforme contrôlable, dans une plage de 100 picolitres à 1 microlitre, d'une large gamme de fluides réactifs de diagnostic, le système comprenant :
une chambre de jet (432) définissant un volume et comprenant des première et seconde ouvertures (431, 433), la première ouverture (431) étant conçue pour recevoir un fluide réactif de diagnostic, la seconde ouverture (433) définissant un orifice ;
un transducteur électro-acoustique (434) en communication mécanique avec la chambre de jet (432), le transducteur (434) fonctionnant en alternance pour dilater et comprimer le volume de la chambre de jet (432) en réponse à une impulsion électrique sélectionnée pour ainsi créer en alternance une onde de dilatation acoustique et une onde de compression acoustique dans le fluide, l'onde de compression étant suffisante pour émettre une goutte dudit fluide au travers de l'orifice (433) ;
un moyen (500) pour générer un certain nombre d'impulsions électriques qui suffit pour provoquer la distribution d'une quantité souhaitée du fluide, ledit moyen de génération (500) étant adapté pour générer des impulsions électriques qui ont pour effet que le volume défini par la chambre de jet se dilate d'une valeur suffisante pour permettre l'admission d'une petite quantité de l'alimentation en réactif ;
un moyen (530) pour faire varier les caractéristiques des impulsions, les caractéristiques étant sélectionnées dans le groupe comprenant le temps de croissance ; le temps de croissance et le temps de chute ; le temps de croissance, le temps de chute et la largeur ; ou le temps de croissance, le temps de chute, la largeur et l'amplitude ;
au moins une chambre de jet supplémentaire (432) en communication de fluide avec un fluide réactif de diagnostic supplémentaire ;
au moins un transducteur supplémentaire (434) en communication mécanique avec la chambre de jet supplémentaire (432) ;
au moins un moyen supplémentaire (500) pour appliquer une impulsion électrique présentant des caractéristiques prédéterminées au transducteur supplémentaire ;
un moyen (530) pour générer des nombres respectifs d'impulsions électriques qui suffisent pour provoquer la distribution de quantités précises des fluides réactifs de diagnostic selon un rapport volumétrique souhaité ; et
un réceptacle (904) conçu pour recevoir les fluides et positionné à cette fin.

2. Appareil de diagnostic selon la revendication 1, **caractérisé en ce que** l'un des fluides réactifs de diagnostic comprend du sérum et **en ce que** les chambres de jet (432) coopèrent de telle sorte que l'autre fluide de diagnostic soit émis de manière à être en contact avec le sérum et à se mélanger avec.

3. Appareil de diagnostic selon une ou plusieurs des revendications 1 à 2, **caractérisé en ce que** la chambre de jet (432) comprend un tube cylindrique (435) et **en ce que** le transducteur (434) est monté de façon concentrique par rapport audit tube cylindrique.

4. Appareil de diagnostic selon une ou plusieurs des revendications 1 à 2, **caractérisé en ce que** la chambre de jet (432) est de forme conique.

5. Appareil de diagnostic selon une ou plusieurs des revendications 1 à 2, **caractérisé en ce que** la chambre de jet (432) comprend au moins une paroi de chambre (435) qui est formée d'un seul tenant avec le transducteur (434).

6. Appareil de diagnostic selon une ou plusieurs des revendications 1 à 3, **caractérisé en ce que** le transducteur (434) est en forme de disque et il constitue la base de la chambre de jet de forme conique (432).

7. Appareil de diagnostic selon une ou plusieurs des revendications 1 à 6, **caractérisé en ce que** l'orifice (433) comprend une face d'extrémité qui est revêtue d'un polymère hydrophobe.

8. Appareil de diagnostic selon une ou plusieurs des revendications 1 à 5, **caractérisé en ce que** le transducteur (434) est de forme cylindrique et comprend une première électrode (437) située sur la paroi interne du cylindre (435) qui s'enroule autour d'une extrémité du cylindre (435); et **en ce qu'**une seconde électrode (436) est située sensiblement sur la paroi externe du cylindre (435) et est isolée électriquement de la: première électrode (437).

9. Appareil de diagnostic selon une ou plusieurs des revendications 1 à 8, **caractérisé en ce que** .l'appareil comprend en outre un moyen (902) pour diriger ou dévier le ou les fluides de diagnostic émis selon un chemin souhaité.

10. Appareil de diagnostic selon une ou plusieurs des revendications précédentes, **caractérisé en ce qu'**il comprend en outre un moyen (906) pour détecter les résultats d'une réaction entre le fluide réactif de diagnostic et le fluide réactif de diagnostic supplémentaire.

11. Appareil de diagnostic selon une ou plusieurs des revendications précédentes, **caractérisé en ce que** la chambre de jet (432) est réalisée en verre.

12. Appareil de diagnostic selon une ou plusieurs des revendications 1 à 11, **caractérisé en ce qu'**il comprend en outre un réservoir démontable (200) contenant du fluide réactif de diagnostic, en communication de fluide avec la première ouverture (431) de la chambre de jet (432) et ainsi, une action de capillarité au niveau de l'orifice (433) produit un différentiel de pression entre l'intérieur et l'extérieur du réservoir (200) suite à l'émission d'une goutte depuis la chambre de jet (432).

13. Procédé de mise en oeuvre d'un test de diagnostic à l'aide d'un appareil de diagnostic selon une ou plusieurs des revendications précédentes du type incluant un réceptacle, le procédé comprenant les étapes de :
(a) positionnement du réceptacle par rapport à l'orifice (433) des chambres de jet (432) dont chacune définit un volume, un orifice et une ouverture (410) pour recevoir du fluide réactif de diagnostic ;
(b) dilatation et compression en alternance des volumes des chambres de jet (432) par un moyen de transducteur électro-acoustique (434), d'où la création ainsi en alternance d'une onde de dilatation acoustique et d'une onde de compression acoustique dans les fluides, l'onde de compression suffisant pour émettre lesdites gouttes au travers des orifices (433) respectifs ;
(c) génération d'impulsions électriques ;
(d) application des impulsions électriques générées audit moyen de transducteur (434) ;
(e) octroi de l'autorisation aux gouttes émises d'être reçues dans le réceptacle; et
(f) répétition des étapes (a) à (d) jusqu'à ce que lesdites quantités précises desdits fluides réactifs de diagnostic aient été délivrées,
dans lequel l'étape (c) comprend en outre une variation des caractéristiques électriques desdites impulsions choisies parmi un groupe comprenant un temps de croissance; un temps de croissance et un temps de chute ; un temps de croissance, un temps de chute et une largeur ; ou un temps de croissance, un temps de chute, une largeur et une amplitude, jusqu'à ce que les gouttes émises desdits fluides réactifs soient d'une taille prédéterminée sensiblement uniforme.

14. Procédé de mise en oeuvre d'un test de diagnostic à l'aide d'un appareil de diagnostic selon une ou plusieurs des revendications 1 à 12 du type incluant un réceptacle, le procédé comprenant les étapes de :
(a) positionnement du réceptacle par rapport à l'orifice (433) des chambres de jet (432) dont chacune définit un volume, un orifice et une ouverture (410) pour recevoir du fluide réactif de diagnostic ;
(b) pressurisation des fluides réactifs dans les chambres de jet (432);
(c) dilatation et compression en alternance du volume des chambres de jet (432) au moyen d'un moyen de transducteur électro-acoustique (434), d'où la création ainsi en alternance d'une onde de dilatation acoustique et d'une onde de compression acoustique dans les fluides de manière à rompre le flux de fluide pressurisé en gouttes.
(d) génération d'impulsions électriques ; et
(e) application des impulsions électriques générées audit moyen de transducteur (434),
dans lequel ladite étape (d) comprend en outre la variation des caractéristiques électriques desdites impulsions choisies parmi un groupe comprenant un temps de croissance ; un temps de croissance et un temps de chute ; un temps de croissance, un temps de chute et une largeur ; ou un temps de croissance, un temps de chute, une largeur et une amplitude.
